(19) Europäisches Patentamt
European Patent Office
Office européen des brevets

(11) **EP 4 517 699 A1**

(12) **EUROPEAN PATENT APPLICATION**

(43) Date of publication:
05.03.2025 Bulletin 2025/10

(21) Application number: 24197568.9

(22) Date of filing: 30.08.2024

(51) International Patent Classification (IPC):
*G06V 20/58* (2022.01)

(52) Cooperative Patent Classification (CPC):
G06V 20/582

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 CN 202311117556
31.08.2023 CN 202311118124

(71) Applicant: **Beijing Horizon Information
Technology Co., Ltd.
Beijing 100094 (CN)**

(72) Inventor: **HU, Zhaoyang
Beijing, 100094 (CN)**

(74) Representative: **Dehns Germany Partnerschaft
mbB
Theresienstraße 6-8
80333 München (DE)**

(54) **TRAFFIC SIGN DETECTION METHOD AND APPARATUS, STORAGE MEDIUM, AND ELECTRONIC DEVICE**

(57) Provided are a traffic sign detection method and apparatus, a storage medium, and an electronic device. The method includes: determining an image frame sequence of the traffic sign captured by a vehicle-mounted camera for a vehicle, and odometer frame information corresponding to each frame image in the image frame sequence; determining a residual function and an optimization model based on each frame image and the odometer frame information corresponding to each frame image; determining a target position of the traffic sign in a preset coordinate system based on the residual function and the optimization model; and determining a target pose of the traffic sign or a real-time distance between the vehicle-mounted camera and the traffic sign based on the target position. Optimizing detection of a pose of the traffic sign or a distance between the vehicle-mounted camera and the traffic sign with a plurality of frame images and the corresponding odometer frame information can reduce detection errors in the pose and the distance and improve detection accuracy, thereby ensuring accuracy of a decision result of the vehicle and improving safety of vehicle driving.

EP 4 517 699 A1

**Description**

**CROSS-REFERENCE TO RELATED APPLICATION**

This disclosure claims priority to Chinese patent application No. 202311117556.4, filed on August 31, 2023 and entitled " TRAFFIC SIGN DISTANCE MEASUREMENT METHOD AND APPARATUS, STORAGE MEDIUM, AND ELECTRONIC DEVICE", and priority to Chinese patent application No. 202311118124.5, filed on August 31, 2023 and entitled " TRAFFIC SIGN POSE DETECTION METHOD AND APPARATUS, STORAGE MEDIUM, AND ELECTRONIC DEVICE".

**FIELD OF THE INVENTION**

This disclosure relates to the technical field of intelligent driving, and in particular, to a traffic sign detection method and apparatus, a computer readable storage medium, and an electronic device.

**BACKGROUND OF THE INVENTION**

With rapid development of social economy, a quantity of vehicles is increasing with each passing day, and development of intelligent driving technologies is becoming increasingly important for safe driving of the vehicles. An intelligent driving system mainly relies on vehicle-mounted cameras and vehicle-mounted radars to perceive a surrounding environment of the vehicle. In related technologies, an intelligent driving system has significant detection errors in a traffic sign on a road, which affects safe vehicle driving.

**SUMMARY OF THE INVENTION**

To resolve the foregoing technical problem of significant detection errors in a traffic sign, this disclosure provides a traffic sign detection method and apparatus, a computer readable storage medium, and an electronic device, which can reduce the detection errors in the traffic sign, thereby ensuring accuracy of a decision result of a vehicle, and improving safety of vehicle driving.

According to a first aspect of this disclosure, a traffic sign detection method is provided, including: determining an image frame sequence of the traffic sign captured by a vehicle-mounted camera for a vehicle, and odometer frame information corresponding to each frame image in the image frame sequence; determining a residual function and an optimization model based on each frame image and the odometer frame information corresponding to each frame image; determining a target position of the traffic sign in a preset coordinate system based on the residual function and the optimization model; and determining a target pose of the traffic sign or a real-time distance between the vehicle-mounted camera and the traffic sign based on the target position.

According to a second aspect of this disclosure, a traffic sign detection apparatus is provided, including: a first determining module, configured to determine an image frame sequence of the traffic sign captured by a vehicle-mounted camera for a vehicle, and odometer frame information corresponding to each frame image in the image frame sequence; a second determining module, configured to determine a residual function and an optimization model based on each frame image and the odometer frame information corresponding to each frame image; a third determining module, configured to determine a target position of the traffic sign in a preset coordinate system based on the residual function and the optimization model; and a fourth determining module, configured to determine a target pose of the traffic sign or a real-time distance between the vehicle-mounted camera and the traffic sign based on the target position.

According to a third aspect of this disclosure, a computer readable storage medium is provided. The storage medium stores a computer program which is used for implementing the traffic sign detection method provided in the first aspect of this disclosure.

According to a fourth aspect of this disclosure, an electronic device is provided. The electronic device includes: a processor; and a memory configured to store a processor-executable instruction. The processor is configured to read the instruction from the memory, and execute the instruction to implement the traffic sign detection method provided in the first aspect of this disclosure.

According to a fifth aspect of this disclosure, a computer program product is provided. When instructions in the computer program product are executed by a processor, the traffic sign detection method provided in the first aspect of this disclosure is implemented.

The traffic sign detection method provided in this disclosure is applicable to an intelligent driving system. During driving of the vehicle, the detection apparatus predicts the target position of the traffic sign in the preset coordinate system based on a plurality of frame images of the traffic sign captured by the vehicle-mounted camera and the odometer frame information corresponding to the plurality of frame images; and further determines the target pose of the traffic sign or the real-time distance between the vehicle-mounted camera and the traffic sign based on the target position. According to this method, detection errors in the pose of the traffic sign and in the real-time distance can be reduced, thereby ensuring accuracy of a decision result of the vehicle and improving safety of vehicle driving.

## BRIEF DESCRIPTION OF THE DRAWINGS

FIG. 1A is a schematic diagram of a composition of a traffic sign detection system according to an exemplary embodiment of this disclosure;
FIG 1B is a schematic diagram of a scenario of performing distance measurement by a distance measurement system according to an exemplary embodiment of this disclosure;
FIG. 1C is a schematic diagram of a frame image of a traffic lamp that is captured by a vehicle-mounted camera according to an exemplary embodiment of this disclosure;
FIG. 2 is a schematic flowchart of a traffic sign detection method according to an exemplary embodiment of this disclosure;
FIG. 3A is a schematic diagram of a frame image of a traffic signpost that is captured by a vehicle-mounted camera according to an exemplary embodiment of this disclosure;
FIG. 3B is a schematic diagram of a plurality of detection points determined through a frame image of a traffic signpost shown in FIG. 3A;
FIG. 4 is a schematic flowchart of a traffic sign detection method according to another exemplary embodiment of this disclosure;
FIG. 5 is a schematic flowchart of a traffic sign pose detection method according to an exemplary embodiment of this disclosure;
FIG. 6 is a schematic flowchart of a traffic sign pose detection method according to another exemplary embodiment of this disclosure;
FIG. 7 is a schematic flowchart of a traffic sign detection method according to still another exemplary embodiment of this disclosure;
FIG. 8 is a schematic flowchart of a traffic sign detection method according to yet another exemplary embodiment of this disclosure;
FIG. 9 is a schematic flowchart of a traffic sign detection method according to a further exemplary embodiment of this disclosure;
FIG. 10 is a schematic structural diagram of a composition of a traffic sign detection apparatus according to an exemplary embodiment of this disclosure;
FIG. 11 is a schematic structural diagram of a composition of a traffic sign detection apparatus according to another exemplary embodiment of this disclosure; and
FIG. 12 is a structural diagram of a composition of an electronic device according to an exemplary embodiment of this disclosure.

## DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement of components and steps, numeric expressions, and numerical values described in these embodiments.

Application overview

An intelligent driving system autonomously makes decisions and controls by perceiving and analyzing environmental information around a vehicle, so as to achieve automatic or semi-automatic driving of the vehicle. The intelligent driving system mainly relies on vehicle-mounted cameras and vehicle-mounted radars to acquire environmental information surrounding an intelligent driving vehicle (vehicle for short hereinafter).

Accurately recognizing a traffic sign is key to safe driving of the intelligent driving vehicle. Due to complex and ever-changing road traffic environments, and in practical driving environments, image quality of the traffic sign captured by the vehicle-mounted camera may be affected by light and weather changes, accuracy of a traffic sign recognition algorithm is greatly reduced especially when the traffic sign tilts or is distorted. The intelligent driving system makes decisions based on recognition results with significant errors, which affects accuracy of the decision results, thus affecting safety of vehicle driving.

In a distance perceiving scenario, the intelligent driving system obtains environmental images, of surroundings of the vehicle, that are captured in a real-time manner by the vehicle-mounted camera; predicts a distance between the vehicle-mounted camera and the traffic sign based on the images captured in a real-time manner; and determines and performs corresponding planning and control operations based on the predicted distance. At present, the vehicle-mounted cameras applied in the field of intelligent driving are mainly monocular cameras or binocular cameras. The monocular camera implements distance measurement mainly based on target recognition and the principle of pinhole imaging, having advantages of a simple structure, mature algorithms, low computational complexity, and low costs, but is sensitive to factors such as weather and light. Thus, in environments with poor weather or light, accuracy of target recognition is greatly reduced, leading to a decrease in distance measuring accuracy, which affects safe driving of the vehicle. The binocular camera implements distance measurement mainly based on the principle of trilateration. Although there is no need to recognize a target object, the binocular camera has disadvantages such as a complex structure, high algorithm complexity, high costs, and especially huge computational complexity. In addition, factors such as weather and light also have certain impacts on the binocular camera, which affects accuracy of distance measurement and thus affecting safe driving of the vehicle.

To resolve a problem in related technologies that safe driving of the vehicle is affected due to significant detection errors in a pose of the traffic sign and low distance measurement accuracy, an embodiment of this disclosure provides a traffic sign detection method. According to this method, an optimization model is constructed based on an image frame sequence captured by the vehicle-mounted camera and odometer frame information corresponding to each frame image in the image frame sequence; and the pose of the traffic sign or the distance between the vehicle-mounted camera and the traffic sign is predicted based on an optimal solution of the optimization model. Optimizing detection of the pose of the traffic sign or the distance between the vehicle-mounted camera and the traffic sign through a plurality of frame images and the corresponding odometer frame information can reduce detection errors in the pose of the traffic sign or the distance between the vehicle-mounted camera and the traffic sign. Making decisions based on a more precise pose or distance can improve accuracy of decision results, thereby ensuring safe driving of the vehicle.

Exemplary system

A traffic sign is a sign set on a road to instruct traffic participants such as vehicles or pedestrians. In the field of intelligent driving, an intelligent driving vehicle is controlled to drive normally on the road based on information on the traffic sign. A position and an orientation of the traffic sign, a distance between the vehicle and the traffic sign, and other factors may affect recognition accuracy of a perception module in the intelligent driving system, which further affects a decision result of a decision-making module. In view of the above, accurate detection for a pose or a distance of the traffic sign is a necessary condition for safe driving of the vehicle. For example, when the vehicle is going to drive to an intersection, it is needed to predict a distance from the vehicle to the intersection to determine whether to adjust a speed. In this embodiment of this disclosure, the traffic sign uses a signal lamp (that is, a traffic lamp) as an example, and a distance between a vehicle-mounted camera and the traffic lamp is predicted. The distance between the vehicle-mounted camera and the signal lamp refers to a distance between an optical center of the vehicle-mounted camera and a center point of the signal lamp.

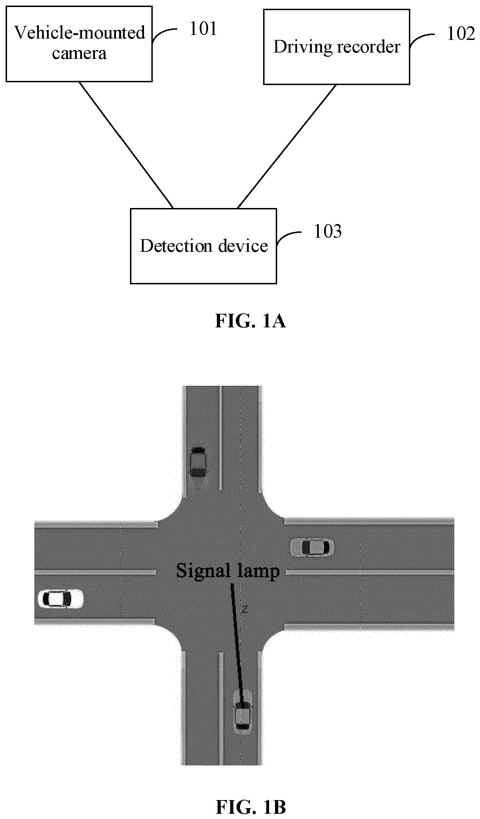

FIG. 1A is a schematic diagram of a composition of a traffic sign detection system according to an exemplary embodiment of this disclosure. As shown in FIG. 1A, the detection system includes a vehicle-mounted camera 101, a driving recorder 102, and a detection device 103.

The vehicle-mounted camera 101 is configured to acquire a plurality of frame images of the traffic sign, and may be disposed at a center position at an upper end of a front windshield inside the vehicle. At present, vehicle-mounted cameras applied in the field of intelligent driving are mainly monocular cameras or binocular cameras. The monocular camera has advantages of a simple structure, mature algorithms, low computational complexity, and low costs, but is sensitive to factors such as weather and light. Thus, in environments with poor weather or light, accuracy of target recognition is greatly reduced. The binocular camera implements target detection mainly based on the principle of trilateration. Compared to the monocular camera, the binocular camera can improve recognition accuracy to a certain extent, but has disadvantages such as a complex structure, high algorithm complexity, and high costs. Moreover, compared to the monocular camera, computational complexity of the binocular camera is huge, which affects a recognition speed. In this embodiment of this disclosure, the vehicle-mounted camera 101 may be a monocular camera that captures planar images by using a single light sensitive element.

The driving recorder 102, commonly known as a black box of a vehicle, is generally disposed at a lower end of a co-driver seat; and is an electronic recording device that records and stores a speed, time, mileage, and other status information related to driving of the vehicle, and may output data through an interface.

The detection device 103 is configured to determine odometer frame information corresponding to each frame image in an image frame sequence based on the image frame sequence of the traffic sign captured by the vehicle-mounted camera 101 and odometer frame information recorded by the driving recorder 102; and then, determine a residual function and an optimization model based on each frame image and the odometer frame information corresponding to each frame image; further, determine a target position of the traffic sign in a preset coordinate system based on the residual function and the optimization model; and finally, determine a target pose of the traffic sign or a distance between the vehicle-mounted camera and the traffic sign based on the target position.

According to the traffic sign detection system provided in this embodiment of this disclosure, detecting a pose of the traffic sign or the distance between the vehicle-mounted camera and the traffic sign through a plurality of frame images of the traffic sign that are captured by the vehicle-mounted camera and the odometer frame information respectively corresponding to the plurality of frame images can reduce detection errors in the pose of the traffic sign or the distance between the vehicle-mounted camera and the traffic sign. Making decisions based on a more precise pose or distance can improve accuracy of decision results, thereby ensuring safe driving of the vehicle.

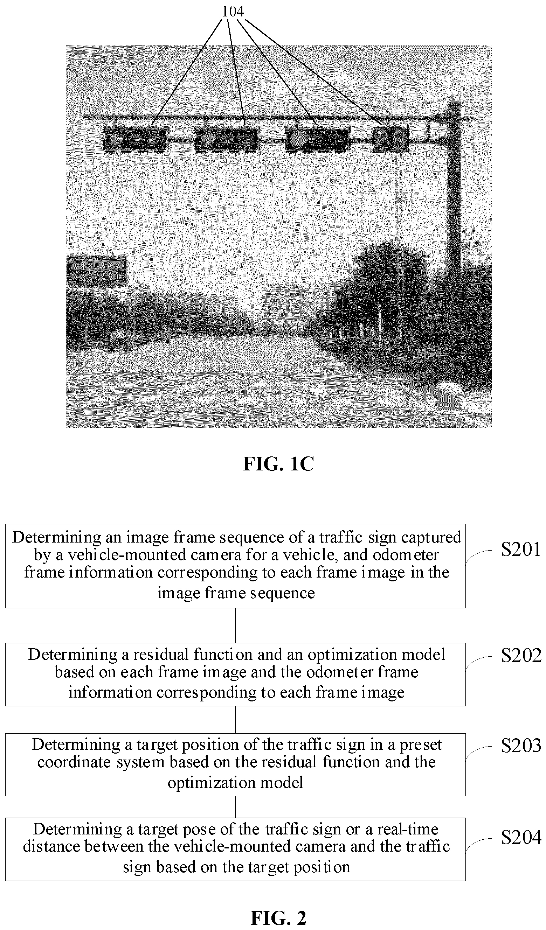

FIG 1B is a schematic diagram of a scenario of performing distance measurement by a distance measurement system according to an exemplary embodiment of this disclosure. In a driving scenario shown in FIG. 1B, the vehicle-mounted camera 101 acquires images for the traffic sign (that is, a signal lamp in FIG. 1B) in a real-time manner during driving, and an captured frame image of the signal lamp is shown in FIG. 1C. The vehicle-mounted camera 101 transmits a plurality of captured frame images to the detection device 103. The detection device 103 receives the plurality of frame images sent by the vehicle-mounted camera, and sequences the plurality of frame images according to acquisition time, to form the image frame sequence.

A position and an attitude of the vehicle vary when each frame image is captured by the vehicle-mounted camera 101. Based on this corresponding relationship, the detection device 103 determines the odometer frame information corresponding to each frame image in the image frame sequence from the odometer information recorded by the driving recorder 102. Subsequently, the detection device 103 constructs the residual function and the optimization model based on each frame image and the odometer frame information corresponding to each frame image; and determines an optimal solution for the optimization model to obtain a world coordinate of the signal lamp. Due to fixed relative positions of the vehicle-mounted camera 101 and the vehicle, a real-time coordinate of the vehicle-mounted camera 101 may be determined based on the odometer frame information of the vehicle and the relative positions of the vehicle-mounted camera 101 and the vehicle. Finally, a real-time distance between the vehicle-mounted camera 101 and the signal lamp is determined based on the real-time coordinate of the vehicle-mounted camera 101 and the world coordinate of the signal lamp.

Exemplary method

FIG. 2 is a schematic flowchart of a traffic sign detection method according to an exemplary embodiment of this disclosure. As shown in FIG. 2, the detection method includes the following steps.

Step S201. Determining an image frame sequence of the traffic sign captured by a vehicle-mounted camera for a vehicle, and odometer frame information corresponding to each frame image in the image frame sequence.

For example, the detection method in this embodiment of this disclosure may be implemented by a distance measuring device. When the detection method is used for detecting a pose of the traffic sign, a detection device may be a device capable of detecting the pose of the traffic sign. Exemplary description is made in the following embodiments by using an example in which the traffic sign is a traffic signpost when detecting the pose of the traffic sign.

When the detection method is used for detecting a distance between the vehicle-mounted camera and the traffic sign, the detection device may be a distance measuring device, which may obtain the image frame sequence captured by the vehicle-mounted camera in a real-time manner and the odometer frame information corresponding to each frame image in the image frame sequence. Exemplary description is made in the following embodiments by using an example in which the traffic sign is a signal lamp when detecting the distance between the vehicle-mounted camera and the traffic sign.

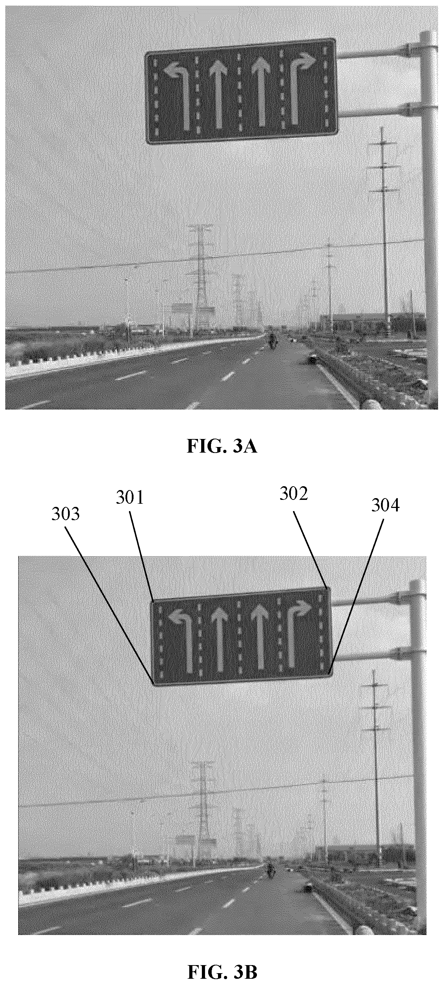

The vehicle-mounted camera disposed on the vehicle acquires images of the traffic sign and obtains a plurality of frame images. Acquisition time of the plurality of frame images has a sequential relationship, and the plurality of frame images may be sequenced in an order of the acquisition time to form the image frame sequence. When the traffic sign is a traffic signpost, a frame image of the traffic signpost captured by the vehicle-mounted camera may be shown in FIG. 3A. In this embodiment of this disclosure, the vehicle-mounted camera may be a monocular camera.

When the vehicle-mounted camera acquires each frame image in the image frame sequence, a pose (including a position and an attitude) of the vehicle is different. In other words, the vehicle-mounted camera corresponds to a pose of the vehicle when acquiring each frame image, and the driving recorder of the vehicle records a corresponding frame of odometer information in this pose. In this embodiment of this disclosure, each frame of information corresponding to each frame image in a plurality frames of information in the odometer information is used as the odometer frame information corresponding to each frame image.

Step S202. Determining a residual function and an optimization model based on each frame image and the odometer frame information corresponding to each frame image.

A residual (denoted as e) represents a difference between an actual observed value and a predicted value obtained through calculation. The actual observed value refers to an actual measurement value or observed value of an image formed by the traffic sign in each frame image, and the predicted value refers to an estimated value calculated through coordinate transformation based on a coordinate of the traffic sign in a preset coordinate system. The preset coordinate system herein may be a world coordinate system or a coordinate system preset in advance.

The residual e may be a residual of different indicators, which correspond to different constraint conditions. On this basis, a plurality of residual functions (denoted as $J_e$) are constructed under different constraint conditions. For example, the residual function $J_e$ may be constructed based on a common optimization function (such as a least square method).

The optimization model (denoted as J) is an optimization function constructed based on the residual function $J_e$.

Step S203. Determining a target position of the traffic sign in a preset coordinate system based on the residual function and the optimization model.

For example, the preset coordinate system is a world coordinate system. When detecting the pose of the traffic sign, a plurality of points on the traffic sign may be selected to serve as detection points. The target position of the traffic sign in the preset coordinate system may be target coordinates corresponding to the plurality of detection points of the traffic sign in the world coordinate system. When determining the target coordinate of each detection point, an optimization objective may be determined as a minimum residual based on the residual function and the optimization model, and then the optimization model may be solved by using the minimum residual being the optimization objective (for example, solving by using a gradient descent method, a Newton's method, a conjugate gradient method, a genetic algorithm, and other optimization methods). An optimal solution obtained is the target coordinate of an ith detection point in the traffic sign. In this embodiment of this disclosure, the target coordinate of the ith detection point $X_{wi}$ of the traffic sign in the world coordinate system W is denoted as $(x_{wi}, y_{wi}, z_{wi})$, where i=1,2, ..., or m, and m represents a quantity of the detection points in the traffic signpost, and is a positive integer.

For example, when detecting the distance between the vehicle-mounted camera and the traffic sign, a target position of the signal lamp in the world coordinate system may be determined based on the residual function and the optimization model. For example, a world coordinate $X_w$ of a center point of the signal lamp in the world coordinate system W may be expressed as $(x_{wi}, y_w, z_{wi})$, and this coordinate is the target position to be determined. When determining the target position, the optimization objective is determined as the minimum residual based on the residual function and the optimization model, and then the optimization model is solved by using the minimum residual being the optimization objective, to obtain an optimal solution for the world coordinate $X_w$, that is, the target position of the signal lamp.

Step S204. Determining a target pose of the traffic sign or a real-time distance between the vehicle-mounted camera and the traffic sign based on the target position.

For example, when detecting the pose of the traffic sign, a plane where the traffic sign is located, an orientation and a position of the traffic sign, and other information may be determined based on the target coordinates respectively corresponding to the plurality of detection points on the traffic sign that are determined in step S203, to obtain the target pose of the traffic sign.

For example, when detecting the distance between the vehicle-mounted camera and the traffic sign, the real-time distance between the vehicle-mounted camera and the traffic sign may be determined based on the odometer frame information corresponding to each frame image and the target position of the traffic sign in the world coordinate system.

In some examples, because the vehicle-mounted camera is fixedly disposed on the vehicle, a position of the vehicle-mounted camera relative to the vehicle remains unchanged. Moreover, a real-time position of the vehicle in the world coordinate system W may be determined by using the driving recorder of the vehicle. Therefore, a real-time position of the vehicle-mounted camera in the world coordinate system W may be determined in combination with the real-time position of the vehicle and the position of the vehicle-mounted camera on the vehicle. In the world coordinate system W, after the real-time position of the vehicle-mounted camera and the target position of the signal lamp are obtained, the real-time distance between the vehicle-mounted camera and the signal lamp may be calculated according to a formula for a distance between points.

In some examples, the real-time distance between the vehicle-mounted camera and the signal lamp may include at least one of a straight-line distance $d$, a lateral distance $d_x$, a longitudinal distance $d_z$, and a vertical distance $d_y$. The straight-line distance $d$ refers to a distance between an optical center of the vehicle-mounted camera and the center point of the signal lamp; the lateral distance $d_x$ refers to a horizontal distance between the optical center of the camera and the center point of the signal lamp in a parallel direction; the longitudinal distance $d_z$ refers to a longitudinal-depth distance between the optical center of the camera and the center point of the signal lamp in a forward direction; and the vertical distance $d_y$ refers to a vertical distance between the optical center of the camera and the center point of the signal lamp in a height direction. The straight-line distance $d$, the lateral distance $d_x$, the longitudinal distance $d_z$, and the vertical distance $d_y$ satisfy a relationship shown in the following formula (1):

$$d = \sqrt{d_x^2 + d_y^2 + d_z^2} \quad (1).$$

In practical applications, different real-time distances may be determined according to different application scenarios. For example, when it is needed to predict a distance between the vehicle and a road sign ahead, a real-time longitudinal distance between the vehicle-mounted camera and the traffic signpost may be predicted; when it is needed to predict whether the vehicle can successfully pass through a height-limiting rod on a road, a vertical distance between the vehicle-mounted camera and the height limit pole may be predicted; and when it is needed to predict whether the vehicle can successfully pass through a width-limiting protection frame on the road, a lateral distance between the vehicle-mounted camera and the width-limiting protection frame may be predicted. In practical applications, the required real-time distance may be determined according to specific application scenarios. This is not limited in this embodiment of this disclosure.

According to the traffic sign detection method provided in this embodiment of this disclosure, performing target optimization based on the plurality of frame images captured in a real-time manner and the odometer frame information to determine the pose of the traffic sign or the real-time distance between the vehicle-mounted camera and the traffic sign can reduce detection errors in the pose of the traffic sign or the real-time distance, and improve detection accuracy. Making decisions based on a more precise pose or real-time distance can improve accuracy of decision results, thereby ensuring safe driving of the vehicle.

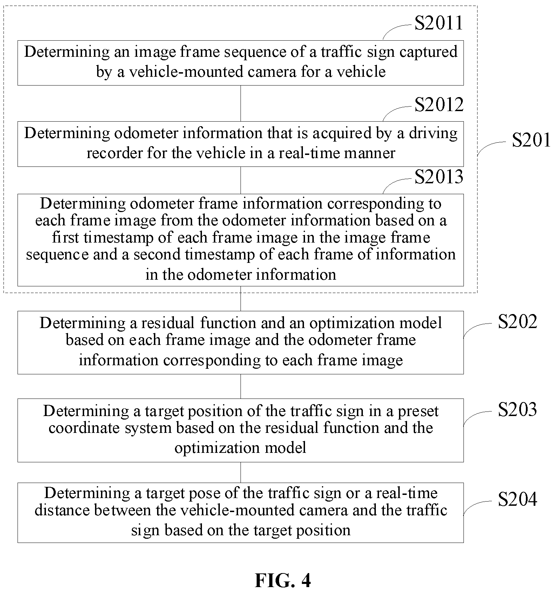

As shown in FIG. 4, on the basis of the embodiment shown in FIG. 2, step 201 may include the following steps S2011 to S2013.

Step S2011. Determining the image frame sequence of the traffic sign captured by the vehicle-mounted camera for the vehicle.

Each frame image captured by the vehicle-mounted camera corresponds to a first timestamp. In an example, the vehicle-mounted camera may directly acquire a video, and the detection device or the distance measuring device selects all or some of frame images in a plurality of frame images included in the video to form the image frame sequence. In another example, the vehicle-mounted camera may acquire a plurality of frame images according to a preset acquisition cycle. In still another example, the vehicle-mounted camera may acquire a plurality of frame images at a random time interval.

In this embodiment of this disclosure, the image frame sequence may be captured in a real-time manner by the vehicle-mounted camera. In other application scenarios, the image frame sequence may also be captured in a non-real-time manner. For example, when determining whether the traffic signpost on the road tilts or is distorted, there is no need to determine the pose of the traffic signpost in a real-time manner. In this scenario, the image frame sequence may be an image captured by the vehicle-mounted camera at certain time in the past.

Step S2012. Determining odometer information that is acquired by a driving recorder for the vehicle in a real-time manner.

The driving recorder disposed on the vehicle, commonly known as a black box of a vehicle, is an electronic recording device that records and stores a speed, time, mileage, and other status information related to driving of the vehicle, and may output data through an interface. During driving, the driving recorder acquires and stores the odometer information in a real-time manner. Various frames of information included in the odometer information acquired by the driving recorder are consecutive in a time sequence, and a shorter time interval of consecutive acquisitions indicates more frames of information acquired per unit time. For example, if the driving recorder records one frame of information every 20 μs (microseconds), the odometer information with duration of 1 s (second) includes 50000 frames of information; and if the driving recorder records one frame of information every 1ms (milliseconds), the odometer information with duration of 1s includes 1000 frames of information.

When it is needed to detect the pose of the vehicle or to measure the distance, the detection device reads, from the driving recorder, the odometer information acquired in a real-time manner. In this embodiment of this disclosure, the various frames of information in the odometer information include a pose of the vehicle when the driving recorder acquires a corresponding frame of information. The pose of the vehicle includes at least a position of the vehicle, and the position is a coordinate position of the vehicle in the world coordinate system W. Each frame of information in the odometer information corresponds to a second timestamp.

Step S2013. Determining the odometer frame information corresponding to each frame image from the odometer information based on a first timestamp of each frame image in the image frame sequence and a second timestamp of each frame of information in the odometer information.

When determining the residual e, an actual observed value and a predicted value of a same parameter in a same frame image are compared. Therefore, it is needed to align each frame image in the image frame sequence with the corresponding odometer frame information in time, that is, determine the odometer frame information corresponding to each frame image in the image frame sequence among a plurality frames of information in the odometer information. Subsequently, the actual observed value and the predicted value are determined based on the frame images captured at a same moment and the odometer frame information.

When aligning in time, frame information of an odometer with a same timestamp as each frame image may be determined as the odometer frame information corresponding to each frame image based on the first timestamp of each frame image and the second timestamp of each frame of information in the odometer information.

In practical applications, in addition to implementing time alignment based on timestamps, alignment between each frame image in the image frame sequence and each frame of information in the odometer information may also be achieved based on a synchronization clock and in other manners. This is not limited in this embodiment of this disclosure.

In this embodiment of this disclosure, performing data alignment between each frame image in the image frame sequence and each frame of information in the odometer information can ensure consistency between each frame image and the corresponding odometer frame information, thereby improving accuracy of a detection result.

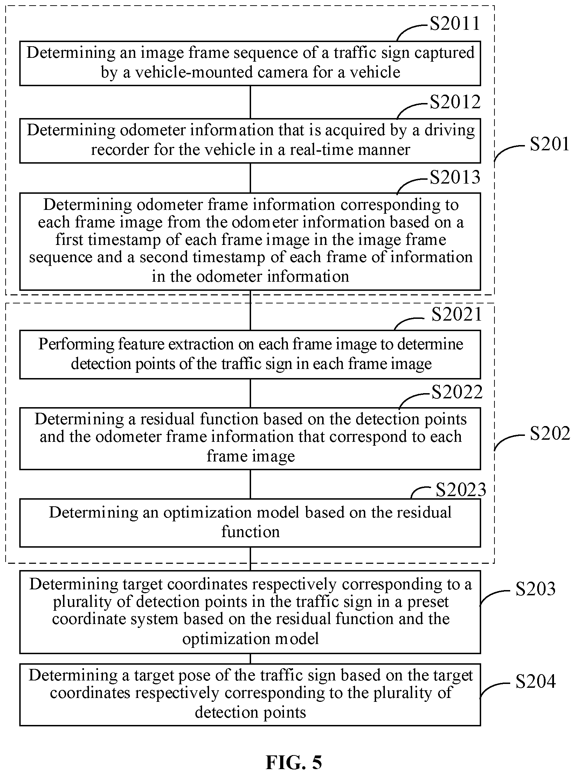

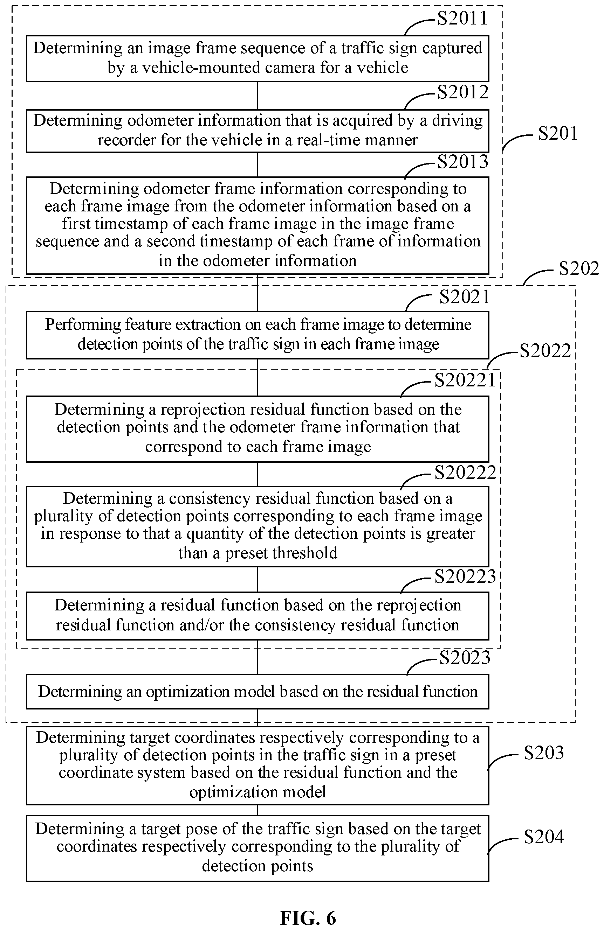

Exemplary description is made below by using an example in which the detection method provided in this embodiment of this disclosure is used for detecting the pose of the traffic sign in combination with a pose detection method for a traffic sign according to FIG. 5 and FIG. 6. It should be noted that when detecting the pose of the traffic sign, the target position determined in step 203 is target coordinates respectively corresponding to the plurality of detection points of the traffic sign in the preset coordinate system.

As shown in FIG. 5, on the basis of the foregoing embodiment, step S202 may include the following steps S2021 to S2023.

Step S2021. Performing feature extraction on each frame image to determine detection points of the traffic sign in each frame image.

Feature extraction is performed on each frame image by using a pre-trained image processing model, to obtain the detection points of the traffic sign in each frame image. The traffic sign has at least one detection point.

For example, the image processing model may be a model that can recognize a corner point of the traffic sign, which is used as a detection point. In this embodiment of this disclosure, the corner point may refer to an intersection point of lines in different directions, and is also referred to as a vertex. For example, corner points of a rectangular traffic signpost are four vertexes of a rectangle, while corner points of a triangular traffic signpost are three vertexes of a triangle. For example, feature extraction is performed on the image frame shown in FIG. 3A to determine the plurality of detection points of the traffic sign in this frame image shown in FIG. 3B, that is, detection points 301, 302, 303, and 304.

For example, the image processing model may also be a model that can recognize a feature point in the traffic sign, which is used as a detection point. For example, a center point of the traffic signpost is used as a detection point. For another example, a midpoint of a side of the traffic signpost is used as a detection point.

Step S2022. Determining the residual function based on the detection points and the odometer frame information that correspond to each frame image.

First, the detection point in each frame image is used as an observation object to determine a pixel-coordinate observed value of the detection point in the pixel coordinate system corresponding to each frame image. The pixel-coordinate observed value is the actual measurement value, which is also referred to as an actual observed value. Based on the odometer frame information corresponding to each frame image, coordinate transformation is performed on a world coordinate $X_{wi}$ of the detection point in the traffic sign to determine a pixel-coordinate predicted value of the detection point in the traffic sign in the pixel coordinate system corresponding to each frame image. The pixel-coordinate predicted value is an estimated predicted value. Subsequently, the residual e of the detection point is determine based on the actual observed value and the predicted value of a same detection point in a same frame image. Finally, a residual function $J_e$ is constructed based on the residual e corresponding to m detection points in n frame images. Both m and n are positive integers, where m represents a quantity of detection points in one frame image, and n represents a quantity of image frames included in the image frame sequence.

Step S2023. Determining the optimization model based on the residual function.

The optimization model J is an optimization function constructed based on the residual function $J_e$. For example, when there are a plurality of residual functions $J_e$, the optimization model J may be a weighted sum of the plurality of residual functions $J_e$, as shown in the following formula (2):

$$J = \sum_{i=1}^{p} w_i * J_{ei} \tag{2}$$

In the formula, $J_{ei}$ represents an ith residual function, and $w_i$ represents a weight of the ith residual function, where i= 1, 2, ..., or p, and p represents a quantity of constraint conditions.

In practical applications, the optimization model constructed based on the residual function may be also in other forms, such as a square weighted sum, which is not limited herein.

In this embodiment of this disclosure, feature extraction is performed on each frame image to determine a plurality of detection points of the traffic sign in each frame image. A data volume of the plurality of detection points is much smaller than that of an entire frame image. Therefore, performing a residual calculation based on the plurality of detection points can greatly reduce computational complexity, thereby shortening time for recognition, and improving decision-making efficiency of the vehicle.

In practical applications, the residual function may include at least one residual function constructed under different constraint conditions. For example, the residual function includes a reprojection residual function and/or a consistency residual function. As shown in FIG. 6, on the basis of the foregoing embodiment, step S2022 may include the following steps S20221 to S20223.

Step S20221. Determining a reprojection residual function based on the detection points and the odometer frame information that correspond to each frame image.

Theoretically, an observation position of a point on the traffic sign in each frame image needs to be consistent with a projection position of the point on the same frame image. Based on a constraint condition of consistent projection positions, the reprojection residual function is constructed, and is denoted as $J_{e1}$.

In an implementation, the reprojection residual function may be determined according to the following steps.

First, a pixel coordinate of each detection point in each frame image is determined. One frame image is selected from the plurality of frame images to serve as a reference frame image, and other images except the reference frame image in the plurality of frame images are used as observation frame images. For ease of distinction, a pixel coordinate of each detection point in the reference frame image may be referred to as a reference pixel coordinate, and a pixel coordinate of each detection point in each observation frame image may be referred to as an observation pixel coordinate.

Subsequently, a projection relationship between the world coordinate system and the pixel coordinate system corresponding to each frame image is determined based on relationships between the world coordinate system, a camera coordinate system, an imaging plane coordinate system, and the pixel coordinate system. According to the projection relationship, the reference pixel coordinate of each detection point is projected to the world coordinate system to determine a projected world coordinate of each detection point. Further, based on the odometer frame information, the projected world coordinate of each detection point is re-projected to a pixel coordinate system corresponding to each observation frame image, to obtain a reprojection pixel coordinate of each detection point in each observation frame image.

Finally, a difference between the observation pixel coordinate and the reprojection pixel coordinate of a same detection point in a same frame image is calculated, and this difference is sued as a reprojection residual. The reprojection residual function $J_{e1}$ is constructed based on this reprojection residual.

Step S20222. Determining a consistency residual function based on a plurality of detection points corresponding to respective frame images in response to that a quantity of the detection points is greater than a preset threshold.

When the quantity of the detection points on the traffic signpost is greater than 1, there is a positional consistency constraint between the plurality of detection points, and the consistency residual function is constructed based on this constraint.

In an implementation, since the plurality of detection points are located on a same traffic sign, a unique plane may be determined through any three non-collinear detection point among the plurality of detection points. For example, a unique plane equation may be constructed based on a first coordinate of the detection point 301, a second coordinate of the detection point 302, and a third coordinate of the detection point 303 in FIG. 3B. Any point (for example, the detection point 304 in FIG. 3B) except the three detection points described above theoretically needs to be located on a plane determined based on the three detection points. In other words, a distance between a fourth coordinate of the detection point 304 and the determined plane is 0. Based on a constraint condition that the plurality of detection points are coplanar and have consistent positions, a consistency residual function is constructed, and is denoted as $J_{e2}$. The first coordinate, the second coordinate, the third coordinate, and the fourth coordinate are coordinates of the detection point 301, the detection point 302, the detection point 303, and the detection point 304 in a same coordinate system, respectively. For example, this coordinate system may be a world coordinate system, a camera coordinate system, a vehicle-body coordinate system, or the like. This is not limited in this embodiment of this disclosure.

In another implementation, theoretically, distances between the plurality of detection points on a same traffic sign and the vehicle are equal. Therefore, a consistency residual function may also be constructed based on a constraint condition that the distances between the plurality of detection points on the same traffic sign and the vehicle are consistent, which is denoted as $J_{e3}$.

Step S20223. Determining the residual function based on the reprojection residual function and/or the consistency residual function.

For example, steps S20221 and S20222 may be selectively performed based on actual composition of the residual function. For example, when the residual function only includes the reprojection residual function, step S20221 may be performed only; when the residual function only includes the consistency residual function, step S20222 may be performed only; and when the residual function includes the reprojection residual function and the consistency residual function, steps S20221 and S20222 are performed.

Certainly, in addition to the residual functions constructed under the foregoing two constraint conditions, residual functions may also include an imaging residual function constructed based on imaging constraints, and other residual functions constructed under other constraint conditions. This is not limited in this embodiment of this disclosure.

In this embodiment of this disclosure, based on the projection relationship between the coordinate systems, the principle of pinhole imaging, and a spatial position relationship of the plurality of detection points on the same traffic sign, at least one constraint condition for the traffic sign in a plurality of frame images may be determined, and the residual function under at least one constraint condition may be constructed. Considering a residual function of multidimensional indicators can further reduce errors in the detection result.

In some embodiments, step S20221 may be implemented according to the following steps S2211 to S2214.

Step S2211. Determining an observation pixel coordinate of the detection points in each frame image based on the detection points corresponding to each frame image.

In the embodiments of this disclosure, the observation pixel coordinate of each detection point in each frame image may be denoted as $(u_{ji}, v_{ji})$, where i=1, 2, ..., or m, and j= 1, 2, ..., or n. m represents the quantity of the detection points in the traffic signpost, that is, a quantity of detection points in one frame image. The quantity of the detection points determined according to step S2021 is at least one, and therefore, it is satisfied that m≥1. n represents the quantity of the image frames included in the image frame sequence, and it is satisfied that n≥2.

In practical implementation, the reprojection residual function may be constructed based on a constraint of consistent positions for one detection point, or based on a constraint of consistent positions for a plurality of detection points. When the reprojection residual function is constructed based on the constraint of consistent positions for one detection point, the pixel coordinate of the detection point in each frame image is determined. In this case, the observation pixel coordinate of the detection points in each frame image may be denoted as $(u_j, v_j)$, where j=1, 2, ..., or n.

Step S2212. Determining a reference frame image from various frame images, and determine at least one frame image except the reference frame image as an observation frame image.

The reference frame image herein may be any frame image in the plurality of frame images, and the observation frame image may be some or all images except the reference frame image in the image frame sequence. For example, one frame image is used as the reference frame image, and other images except the reference frame image in the image frame sequence are used as observation frame images.

An observation pixel coordinate of each detection point in the reference frame image is denoted as $(u_{0i}, v_{0i})$, and an observation pixel coordinate of each detection point in each observation frame image is denoted as $(u_{ji}, v_{ji})$ Herein, j = 1, 2, ..., or n-1.

Step S2213. Determining a reprojection pixel coordinate of the detection points in each observation frame image based on a camera parameter of the vehicle-mounted camera, the odometer frame information corresponding to each frame image, and the observation pixel coordinate of the detection points in the reference frame image.

In the embodiments of this disclosure, the camera parameter includes an intrinsic parameter of the camera, which is denoted as K. The odometer frame information corresponding to each frame image is used to determine an extrinsic camera parameter of the camera when acquiring each frame image, including a rotation matrix and a translation vector, which is denoted as T.

In an implementation, the reprojection pixel coordinate of the detection points in each observation frame image may be determined according to the following steps: determining a reference coordinate of the detection points in the preset coordinate system based on the camera parameter of the vehicle-mounted camera and the observation pixel coordinate of the detection points in the reference frame image; and determining the reprojection pixel coordinate of the detection points in each observation frame image based on the camera parameter, the reference coordinate of the detection points, and the odometer frame information corresponding to each frame image.

In the embodiments of this disclosure, the preset coordinate system may be a world coordinate system or any customized coordinate system. When not being a world coordinate system, the preset coordinate system may be transformed into the world coordinate system through rotation and translation.

The intrinsic camera parameter K is a factory parameter of the camera, and the intrinsic camera parameter corresponding to each frame image remains unchanged. The extrinsic camera parameter T is related to the pose of the camera, and the extrinsic camera parameter corresponding to each frame image may be determined based on the odometer frame information and the position of the vehicle-mounted camera relative to the vehicle.

In the embodiments of this disclosure, an extrinsic camera parameter of the reference frame image is denoted as $T_0^w$. Using an example in which the preset coordinate system is the world coordinate system, a projection relationship between the world coordinate system and a pixel coordinate system corresponding to the reference frame image may be shown in the following formula (3):

$$O_p = T_0^w * K * O_w \quad (3).$$

$O_w$ represents an origin coordinate of the world coordinate system, and $O_p$ represents an origin coordinate of the pixel coordinate system.

A corresponding projection coordinate, in the world coordinate system, of the observation pixel coordinate ($u_{0i}$, $v_{0i}$) of each detection point in the reference frame image is determined according to the projection relationship between the pixel coordinate system and the world coordinate system shown in the foregoing formula (3). Each projection coordinate is a reference coordinate of each detection point in the preset coordinate system, and is denoted as $X_{0i}$.

In the embodiments of this disclosure, an extrinsic camera parameter of each observation frame image is denoted as $T_{j0}^{w}$. A projection relationship between the world coordinate system and the pixel coordinate system corresponding to each observation frame image may be shown in the following formula (4):

$$O_{jp} = T_{j0}^{w} * K * O_{w} \quad (4).$$

In the foregoing formula, j=1, 2, ..., or n-1, where $O_{jp}$ represents an origin coordinate of a pixel coordinate system corresponding to a jth frame of observation frame image.

After the reference coordinate $X_{0i}$ of each detection point on the traffic signpost is determined, the reference coordinate $X_{0i}$ of each detection point can be re-projected into the pixel coordinate system of each observation frame image based on the odometer frame information that can characterize driving information of the vehicle and the projection relationship between the pixel coordinate system corresponding to each observation frame image and the world coordinate system that is shown in the foregoing formula (4), to obtain the reprojection pixel coordinate of each detection point in each observation frame image, which is denoted as ($u_{jip}$, $v_{jip}$) ,where j =1,2, ...,or n-1.

Step S2214. Determining the reprojection residual function based on the observation pixel coordinate and the reprojection pixel coordinate of the detection points in each observation frame image.

The observation pixel coordinate of each detection point in each observation frame image that is determined according to step S2211 is ($u_{ji}$, $v_{ji}$) . The reprojection pixel coordinate of each detection point in each observation frame image that is determined according to step S2213 is ($uj_{ip}$, $v_{jip}$). A difference between the observation pixel coordinate ($u_{ji}$, $v_{ji}$) and the reprojection pixel coordinate ($u_{jip}$, $v_{jip}$) of each detection point is obtained to determine a reprojection residual ($e_{jiu}$, $e_{jiv}$) of each detection point. The reprojection residual ($e_{jip}$, $e_{jiv}$) of an ith detection point in the jth observation frame image may be expressed in the following formula (5):

$$\begin{cases} e_{jiu} = u_{jip} - u_{ji} \\ e_{jiv} = v_{jip} - v_{ji} \end{cases} \quad (5).$$

In the foregoing formula, j=1, 2, ..., or n-1, and i=1, 2, ..., or m.

For example, in the embodiments of this disclosure, the reprojection residual function established based on the optimization function by using a least square as an example is shown in the following formula (6):

$$J_{e1} = \frac{1}{2} \sum_{j=1}^{n-1} \sum_{i=1}^{m} (e_{jiu}^{2} + e_{jiv}^{2}) \quad (6).$$

When the reprojection residual function is constructed based on the constraint of consistent positions for one detection point, the foregoing formula (6) may be simplified as the following formula (7):

$$J_{e1} = \frac{1}{2} \sum_{j=1}^{n-1} (e_{ju}^{2} + e_{jv}^{2}) \quad (7).$$

In practical applications, the projection residual function may also be constructed by using other optimization functions, which is not limited herein.

In the embodiments of this disclosure, reprojection residuals, in a plurality of frame images, of the detection points in the traffic sign are determined according to the projection relationship between the world coordinate system and the pixel coordinate system. Constructing the reprojection residual function on this basis can reduce detection errors in the pose of the traffic sign.

Based on the foregoing embodiments, using four detection points on the traffic sign as an example, step S20222 of "determining the consistency residual function based on a plurality of detection points corresponding to respective frame images in response to that the quantity of the detection points is greater than the preset threshold" may be implemented according to the following steps S2221 to S2224.

S2221. Determining a first detection point, a second detection point, a third detection point, and a fourth detection point from the plurality of detection points corresponding to each frame image in response to that the quantity of the detection points is greater than the preset threshold.

The first detection point, the second detection point, and the third detection point corresponding to one frame image are not collinear.

When the quantity of the detection points on the traffic signpost is greater than the preset threshold, because the plurality of detection points are located on a same traffic sign, a unique plane may be determined by any three non-collinear detection points among the plurality of detection points. Except the three detection points for determining the plane, other detection points also need to be on this plane. In other words, distances between the other detection points and the plane need to be 0. On this basis, it is determined that there is a positional consistency constraint between the plurality of detection points. In the embodiments of this disclosure, the consistency residual function is constructed based on this constraint.

Two detection points are randomly selected from a plurality of detection points corresponding to a jth frame image to serve as the first detection point and the second detection point. A unique straight line may be determined based on the first detection point and the second detection point. Subsequently, two points, except the first detection point and the second detection point, that are not located on the straight line are randomly selected from the plurality of detection points to serve as the third detection point and the fourth detection point. The first detection point, the second detection point, and the third detection point are not collinear, and may determine a unique plane. Herein, j=1, 2, ..., or n, where n represents the quantity of the image frames included in the image frame sequence, and it is satisfied that n≥2.

It should be noted that the first detection point, the second detection point, the third detection point, and the fourth detection point corresponding to each frame image may be four same detection points, and may also be different detection points. For example, the first detection point corresponding to the jth frame image may be a corner point in an upper left corner of the traffic signpost; and the first detection point corresponding to a (j+1)th frame image may be a corner point in the upper left corner of the traffic signpost or another detection point on the traffic signpost. This is not limited in the embodiments of this disclosure.

Step S2222. Determining a first pixel coordinate of the first detection point, a second pixel coordinate of the second detection point, a third pixel coordinate of the third detection point, and a fourth pixel coordinate of the fourth detection point in each frame image.

In the embodiments of this disclosure, the first pixel coordinate of the first detection point in the jth frame image is denoted as $(uj_1, vj_1)$; the second pixel coordinate of the second detection point is denoted as $(uj_2, vj_2)$; the third pixel coordinate of the third detection point is denoted as $(uj_3, vj_2)$; and the fourth pixel coordinate of the fourth detection point is denoted as $(uj_4, vj_4)$. j=1, 2, ..., or n, where n represents the quantity of the image frames included in the image frame sequence, and it is satisfied that n≥2.

Step S2223. Determining a first camera coordinate of the first detection point, a second camera coordinate of the second detection point, a third camera coordinate of the third detection point, and a fourth camera coordinate of the fourth detection point in each frame image based on the first pixel coordinate of the first detection point, the second pixel coordinate of the second detection point, the third pixel coordinate of the third detection point, and the fourth pixel coordinate of the fourth detection point in each frame image, and the camera parameter of the vehicle-mounted camera.

In the embodiments of this disclosure, the camera parameter includes the intrinsic camera parameter K, which is a factory parameter of the camera. The intrinsic camera parameter corresponding to each frame image remains unchanged.

When determining the camera coordinate for each detection point, the pixel coordinate in the pixel coordinate system is first converted to the imaging plane coordinate system based on a conversion relationship between the pixel coordinate system and the imaging plane coordinate system, so as to obtain the image coordinate of each detection point. Subsequently, an image coordinate, in the imaging plane coordinate system, of each detection point in each frame image is converted to the camera coordinate system based on the principle of pinhole imaging, so as to obtain the camera coordinate of each detection point. The camera coordinate $(x_{ji}, y_{ji}, z_{ji})$ of the ith detection point in the jth frame image may be expressed in the following formula (8):

$$\begin{Bmatrix} x_{ji} \\ y_{ji} \\ z_{ji} \end{Bmatrix} = \frac{z_{ji}}{K} \begin{Bmatrix} u_{ji} \\ v_{ji} \\ 1 \end{Bmatrix} \quad (8).$$

Herein, i=1.2, 3, or 4, and j=1, 2, ..., or n, where n represents the quantity of the image frames included in the image frame sequence, and it is satisfied that n≥2.

Step S2224. Determining the consistency residual function based on the first camera coordinate of the first detection point, the second camera coordinate of the second detection point, the third camera coordinate of the third detection point, and the fourth camera coordinate of the fourth detection point in each frame image.

When determining the consistency residual function, an implementation is to first determine an imaging plane equation of the traffic signpost corresponding to each frame image based on the three camera coordinates of the three non-collinear detection points in each frame image. Subsequently, a distance from the fourth camera coordinate of the fourth detection point to the imaging plane is determined according to a formula for a distance from a point to a plane. This distance is referred to as a consistency residual, which is denoted as $e_j$. Finally, the consistency residual function is constructed based on the consistency residual $e_j$. This is specifically implemented according to the following steps S22241 to S22243.

Step S22241. Determining a traffic sign imaging plane equation corresponding to each frame image based on the first camera coordinate of the first detection point, the second camera coordinate of the second detection point, and the third camera coordinate of the third detection point in each frame image.

The traffic sign imaging plane equation corresponding to the jth frame image is determined based on the first camera coordinate $P_1 = (x_{j1}, y_{j1}, z_{j1})$ of the first detection point, the second camera coordinate $P_2 = (x_{j2}, y_{j2}, z_{j2})$ of the second detection point, and the third camera coordinate $P_3 = (x_{j3}, y_{j3}, z_{j3})$ of the third detection point in each frame image, which may be expressed in the following formula (9):

$$Ax + By + Cz + D = 0 \quad (9).$$

$$\begin{cases} A = (y_{j2} - y_{j1}) * (z_{j3} - z_{j1}) - (z_{j2} - z_{j1}) * (y_{j3} - y_{j1}) \\ B = (z_{j2} - z_{j1}) * (x_{j3} - x_{j1}) - (x_{j2} - x_{j1}) * (z_{j3} - z_{j1}) \\ C = (x_{j2} - x_{j1}) * (y_{j3} - y_{j1}) - (y_{j2} - y_{j1}) * (x_{j3} - x_{j1}) \\ D = -A * x_{j1} - B * y_{j1} - C * z_{j1} \end{cases}$$

In the formula, , and j=1, 2, ..., or, n, where n represents the quantity of the image frames included in the image frame sequence, and it is satisfied that n≥2.

Step S22242. Determining a consistency residual corresponding to each frame image based on the fourth camera coordinate of the fourth detection point in each frame image and the traffic sign imaging plane equation corresponding to each frame image.

The consistency residual $e_j$ corresponding to the jth frame image that is determined according to the formula for a distance from a point to a plane based on the fourth camera coordinate $P_4 = (x_{j4}, y_{j4}, z_{j4})$ of the fourth detection point in the jth frame image and the traffic sign imaging plane equation $Ax + By + Cz + D = 0$ corresponding to the jth frame image may be expressed in the following formula (10):

$$e_j = \frac{|Ax_{j4} + By_{j4} + Cz_{j4} + D|}{\sqrt{A^2 + B^2 + C^2}} \quad (10).$$

Step S22243. Constructing the consistency residual function based on the consistency residual corresponding to each frame image.

For example, in the embodiments of this disclosure, the consistency residual function established based on the optimization function by using a least square as an example is shown in the following formula (11):

$$J_{e2} = \frac{1}{2} \sum_{j=1}^{n} e_j^2 \quad (11).$$

When determining the consistency residual function, another implementation is to first determine an imaging plane normal vector of the traffic signpost corresponding to each frame image based on the three camera coordinates of the three non-collinear detection points in each frame image, which is denoted as $\vec{q}_j$. Subsequently, a distance from the fourth camera coordinate of the fourth detection point to the imaging plane is determined according to the imaging plane normal vector $\vec{q}_j$. This distance is the consistency residual $e_j$. Finally, the consistency residual function is constructed based on the consistency residual $e_j$. This is specifically implemented according to the following steps S22244 to S22246.

Step S22244. Determining an imaging plane normal vector of the traffic sign corresponding to each frame image based on the first camera coordinate of the first detection point, the second camera coordinate of the second detection point, and the third camera coordinate of the third detection point in each frame image.

Based on the first camera coordinate $P_1 = (x_{j1}, y_{j1}, z_{j1})$ of the first detection point, the second camera coordinate $P_2 = (x_{j2}, y_{j2}, z_{j2})$ of the second detection point, and the third camera coordinate $P_3 = (x_{j3}, y_{j3}, z_{j3})$ of the third detection point in the jth frame image, the imaging plane normal vector $\vec{q}_j$ of the traffic sign corresponding to the jth frame image is determined, which may be expressed in the following formula (12):

$$\vec{q}_j = \begin{pmatrix} q_{j1} \\ q_{j2} \\ q_{j3} \end{pmatrix} = \begin{pmatrix} x_{j1} - x_{j2} \\ y_{j1} - y_{j2} \\ z_{j1} - z_{j2} \end{pmatrix} \times \begin{pmatrix} x_{j2} - x_{j3} \\ y_{j2} - y_{j3} \\ z_{j2} - z_{j3} \end{pmatrix} \quad (12).$$

In the formula, j=1, 2, ..., or n, where n represents the quantity of the image frames included in the image frame sequence, and it is satisfied that n≥2.

Step S22245. Determining the consistency residual corresponding to each frame image based on the fourth camera coordinate of the fourth detection point in each frame image and the imaging plane normal vector of the traffic sign corresponding to each frame image.

The distance from the point to the plane is determined based on the fourth camera coordinate $P_4 = (x_{j4}, yj_4, z_{j4})$ of the fourth detection point in the jth frame image and the imaging plane normal vector $\vec{q}_j$ of the traffic sign corresponding to the jth frame image, so as to obtain the consistency residual $e_j$ corresponding to the jth frame image, which may be expressed in the following formula (13):

$$e_j = \frac{\vec{q}_j * \begin{pmatrix} x_{j4} \\ y_{j4} \\ z_{j4} \end{pmatrix}}{\left\| \vec{q}_j \right\|} \quad (13).$$

Step S22246. Constructing the consistency residual function based on the consistency residual corresponding to each frame image.

For example, in the embodiments of this disclosure, the consistency residual function established based on the optimization function by using a least square as an example is shown in the following formula (14):

$$J_{e2} = \frac{1}{2} \sum_{j=1}^{n} e_j^2 \quad (14).$$

In practical applications, the consistency residual $e_j$ may be determined according to the foregoing steps S22241 and S22242, and may also be determined according to the foregoing steps S22244 and S22245; and the consistency residual function may be constructed according to the least square shown in step S22243 or S22246, and may also be constructed by using other optimization functions. These are not limited in the embodiments of this disclosure.

In the embodiments of this disclosure, camera coordinates of a plurality of detection points on the traffic sign are determined based on the principle of pinhole imaging and conversion relationships between the pixel coordinate system, the imaging plane coordinate system, and the camera coordinate system; and the consistency residual function is constructed based on a constraint condition of coplanar imaging of a plurality of detection points. Determining the pose of the traffic sign in combination with a plurality of coplanar points in each frame image can further reduce the detection errors in the pose of the traffic sign. The intelligent driving system makes decisions based on a traffic sign with fewer errors, thereby improving accuracy of decision results, thus improving safety of vehicle driving.

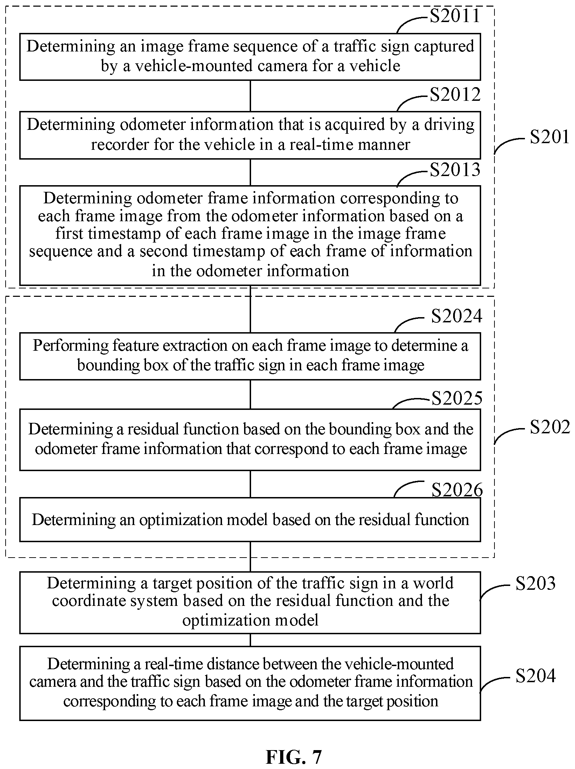

Exemplary description is made below by using an example in which the detection method provided in the embodiments of this disclosure is used for detecting the real-time distance between the vehicle-mounted camera and the traffic sign, in combination with a distance measurement method for a traffic sign according to FIG. 7 to FIG. 9. It should be noted that when detecting the distance between the vehicle-mounted camera and the traffic sign, the target position determined in step 203 is the target position of the traffic sign in the world coordinate system.

As shown in FIG. 7, on the basis of the foregoing embodiments, step S202 may include the following steps S2024 to S2026.

Step S2024. Performing feature extraction on each frame image to determine a bounding box of the traffic sign in each frame image.

Each frame image is processed by using the pre-trained image processing model, to obtain the bounding box of the traffic sign in each frame image. For example, feature extraction is performed on the frame image shown in FIG. 1C to determine bounding boxes of signal lamps in this frame image, as shown in dashed boxes 104 in FIG. 1C.

Step S2025. Determining the residual function based on the bounding box and the odometer frame information that correspond to each frame image.

First, the bounding box in each frame image is used as an observation object to determine an actual measurement value or an actual observed value of the bounding box in the pixel coordinate system. Coordinate transformation is performed on a world coordinate $X_w$ of the signal lamp based on the odometer frame information, to determine a predicted value of the signal lamp in the traffic sign in the pixel coordinate system. Subsequently, the residual e is determine based on the actual observed value and the predicted value. Finally, the residual function $J_e$ is constructed based on the residual e.

Step S2026. Determining the optimization model based on the residual function.

The optimization model J is an optimization function constructed based on the residual function $J_e$. For example, when there are a plurality of residual functions $J_e$, the optimization model J may be a weighted sum of the plurality of residual functions J

In the embodiments of this disclosure, feature extraction is performed on each frame image to determine the bounding box of the traffic sign in each frame image. A data volume of the bounding box is much smaller than that of an entire frame image. Therefore, performing a residual calculation based on the bounding box can reduce computational complexity, thereby shortening time for distance prediction, and improving decision-making efficiency of the vehicle.

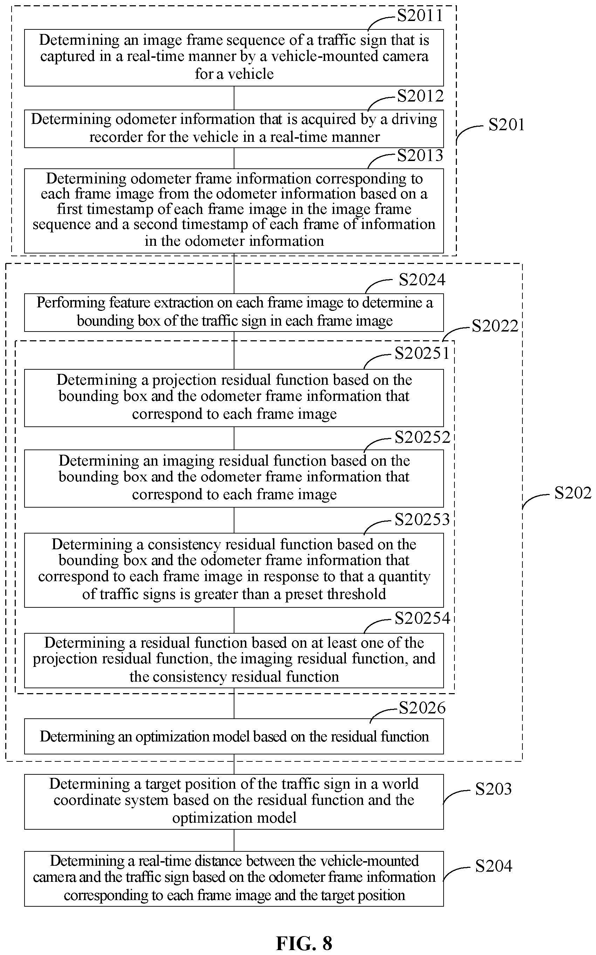

In practical applications, the residual function may include at least one residual function constructed under different constraint conditions. For example, the residual function may include at least one of the following: a projection residual function, an imaging residual function, and a consistency residual function. As shown in FIG. 8, on the basis of the foregoing embodiments, step S2025 may include the following steps S20251 to S20254.

Step S20251. Determining a projection residual function based on the bounding box and the odometer frame information that correspond to each frame image.

Theoretically, a position of a point on the traffic sign in each frame image needs to be consistent with a projection position of that point. A projection residual function is constructed based on a constraint condition of consistent imaging positions, which is denoted as $J_{e1}$.

In an implementation, at least one observation point is first preset on the traffic sign. Subsequently, an observation pixel coordinate of each observation point is determined in the bounding box. A world coordinate of each observation point in the world coordinate system W is projected into each frame image based on the odometer frame information, to determine a projection pixel coordinate of each observation point. Finally, a difference between the observation pixel coordinate and the projection pixel coordinate is sued as a projection residual, and the projection residual function $J_{e1}$ is constructed based on this projection residual.

Step S20252. Determining an imaging residual function based on the bounding box and the odometer frame information that correspond to each frame image.

Theoretically, a size of a line on the traffic sign in each frame image needs to be consistent with a projection size of that line. An imaging residual function is constructed based on a constraint condition of consistent imaging sizes, and is denoted as $J_{e2}$.

In an implementation, at least one observation line is first preset on the traffic sign. Subsequently, an observation pixel size of each observation line is determined in the bounding box. An actual size of each observation line in the world coordinate system W is projected into each frame image based on the odometer frame information, to determine an imaging pixel size of each observation line. Finally, a difference between the observation pixel size and the imaging pixel size is sued as an imaging residual, and the imaging residual function is constructed based on this projection residual, which is denoted as $J_{e2}$.

Step S20253. Determining a consistency residual function based on the bounding box and the odometer frame information that correspond to each frame image in response to that a quantity of traffic signs is greater than a preset threshold.

When the quantity of the traffic signs is greater than one, distances between the plurality of traffic signs and the vehicle are the same. Therefore, theoretically, predicted distances between a plurality of traffic signs located on a same plane in a same frame image and the vehicle-mounted camera are the same. Moreover, if heights of the plurality of traffic signs are consistent, predicted heights of the various traffic signs are also the same. A consistency residual function is constructed based on a constraint condition of consistent distances and heights of a plurality of traffic signs, and is denoted as $J_{e3}$ .

Step S20254. Determining the residual function based on at least one of the projection residual function, the imaging residual function, and the consistency residual function.

For example, steps S20251, S20252, and S20253 may be selectively performed based on actual composition of the residual function. For example, when the residual function only includes the projection residual function, step S20251 may be performed only; when the residual function includes the imaging residual function and the consistency residual function, steps S20252 and S20253 may be performed only; and when the residual function includes the projection residual function, the imaging residual function, and the consistency residual function, steps S20251, S20252, and S20253 may be performed.

Certainly, in addition to the three residual functions constructed under the foregoing three constraint conditions, residual functions may also include other residual functions constructed under other constraint conditions. This is not limited in the embodiments of this disclosure.

In the embodiments of this disclosure, based on the projection relationship between the coordinate systems, the principle of pinhole imaging, and a spatial position relationship of a plurality of side-by-side traffic signs, at least one constraint condition for the traffic sign in a plurality of frame images may be determined, and the residual function under at least one constraint condition may be constructed. Considering a residual function of multidimensional indicators can further reduce errors in the predicted distance.

Based on the foregoing embodiments, using that one observation point is preset on the traffic sign as an example, step S20251 of "determining the projection residual function based on the bounding box and the odometer frame information that correspond to each frame image" may be implemented according to the following steps S2511 to S2514.

Step S2511 . Determining an observation pixel coordinate of a preset observation point of the traffic sign in each frame image based on the bounding box corresponding to each frame image.

The preset observation point may be any point on the traffic sign. For example, the preset observation point is a center point, a point in an upper left corner, or a specific point. Description is made below by using an example in which the preset observation point is a center point of the signal lamp.

According to a geometric relationship, it may be learned that the center point of the signal lamp corresponds to a center point of the bounding box. On this basis, the center point of the bounding box is determined as the observation pixel coordinate of the preset observation point, which is denoted as $(u, v)$ . The observation pixel coordinate of the preset observation point in the jth frame image is denoted as $(u_j, v_j)$ , where j=1, 2, ..., or, n, n represents the quantity of the image frames included in the image frame sequence, and it is satisfied that n≥2.

Step S2512. Determining a world coordinate of the preset observation point.

The world coordinate of the preset observation point is a coordinate $(x_w, y_w, z_w)$ of the center point of the signal lamp, and this coordinate is the target position to be determined.

Step S2513. Determining a projection pixel coordinate of the preset observation point in each frame image based on a camera parameter of the vehicle-mounted camera, the odometer frame information corresponding to each frame image, and the world coordinate of the preset observation point.

In the embodiments of this disclosure, the camera parameter includes the intrinsic parameter of the camera, which is denoted as K. The odometer frame information corresponding to each frame image is used to determine the extrinsic parameter of the camera, including the rotation matrix and the translation vector, which is denoted as T.

In an implementation, the projection pixel coordinate of the preset observation point in the jth frame image may be determined according to the following steps: determining the projection relationship between the world coordinate system and the pixel coordinate system corresponding to each frame image based the camera parameter of the vehicle-mounted camera and the odometer frame information corresponding to each frame image; and determining the projection pixel coordinate of the preset observation point in each frame image based on the projection relationship and the world coordinate of the preset observation point.

The intrinsic camera parameter K is a factory parameter of the camera, and the intrinsic camera parameter corresponding to each frame image remains unchanged. The extrinsic camera parameter T is related to the pose of the camera, and the extrinsic camera parameter corresponding to each frame image may be determined based on the odometer frame information and the position of the vehicle-mounted camera relative to the vehicle. In the embodiments of this disclosure, an extrinsic camera parameter of the jth frame image is denoted as $T^w_j$ . The projection relationship between the world coordinate system and the pixel coordinate system corresponding to each frame image may be shown in the following formula (15):

$$O_p = T_j^w * K * O_w \quad (15).$$

$O_w$ represents the origin coordinate of the world coordinate system, and $O_p$ represents the origin coordinate of the pixel coordinate system.

The world coordinate (xw' $y_w$, $z_w$) of the preset observation point that is determined in step S2512 is substituted into the foregoing formula (15), so as to obtain the projection pixel coordinate $(u_{jp}, v_{jp}) = T_j^w * K * \dfrac{1}{z_j} (x_w, y_w, z_w)$ of the preset observation point in each frame image.

In another implementation, the projection pixel coordinate of the preset observation point in the jth frame image may be determined according to the following steps: determining a camera coordinate of the preset observation point in each frame image based the world coordinate of the preset observation point and the odometer frame information corresponding to each frame image; and determining the projection pixel coordinate of the preset observation point in each frame image based on the camera parameter of the vehicle-mounted camera and the camera coordinate of the preset observation point in each frame image.

If the world coordinate of the preset observation point is ($x_w$, $y_w$, $z_w$), and the odometer frame information (that is, the extrinsic camera parameter) corresponding to the jth frame image is $T^w_j$, the camera coordinate ($x_j$, $y_j$, $z_j$) of the preset observation point in the jth frame image may be expressed in the following formula (16):

$$(x_j, y_j, z_j) = T_j^w * (x_w, y_w, z_w) \quad (16).$$

If the camera parameter (the intrinsic camera parameter) is K, and the camera coordinate of the preset observation point is ($x_j$, $y_j$, $z_j$), the projection pixel coordinate ($u_{jp}$, $v_{jp}$) of the preset observation point in the jth frame image may be expressed in the following formula (17):

$$(u_{jp}, v_{jp}) = T_j^w * K * \frac{1}{z_j} (x_w, y_w, z_w) \quad (17).$$

Step S2514. Determining the projection residual function based on the observation pixel coordinate and the projection pixel coordinate of the preset observation point in each frame image.

The observation pixel coordinate of the preset observation point in each frame image that is determined according to step S2511 is ($u_j$, $v_j$). The projection pixel coordinate of the preset observation point in each frame image that is determined according to step S2513 is ($u_{jp}$, $v_{jp}$). A projection residual ($e_{ju}$, $e_{jv}$) of the jth frame image that is determined based on the observation pixel coordinate ($u_j$, $v_j$) and the projection pixel coordinate ($u_{jp}$, $v_{jp}$) may be expressed in the following formula (18):

$$\begin{cases} e_{ju} = u_{jp} - u_j \\ e_{jv} = v_{jp} - v_j \end{cases} \quad (18).$$

For example, in the embodiments of this disclosure, the projection residual function established based on the optimization function by using a least square as an example is shown in the following formula (19):

$$J_{e1} = \frac{1}{2} \sum_{j=0}^{n} (e_{ju}^2 + e_{jv}^2) \quad (19).$$

In practical applications, the projection residual function may also be constructed by using other optimization functions, which is not limited herein.

In the embodiments of this disclosure, determining a projection constraint condition for the traffic sign in a plurality of frame images based on the projection relationship between the world coordinate system and the pixel coordinate system can reduce errors in the predicted distance between the vehicle-mounted camera and the traffic sign.

Based on the foregoing embodiments, using that an observation line is preset on the traffic sign as an example, step S20252 of "determining the imaging residual function based on the bounding box and the odometer frame information that correspond to each frame image" may be implemented according to the following steps S2521 to S2524.

Step S2521 . Determining an observation pixel size of a preset observation line of the traffic sign in each frame image based on the bounding box corresponding to each frame image.

The preset observation line may be any line segment on the traffic sign. For example, the preset observation line is a short side, a diagonal, or a specific line of the signal lamp. Description is made below by using an example in which the preset observation line is a short side of the signal lamp.

According to a geometric relationship, it may be learned that the short side of the signal lamp corresponds to a short side of the bounding box. On this basis, a pixel size of the short side of the bounding box is determined as the observation pixel size of the preset observation line, which is denoted as s. The observation pixel size of the preset observation line in the jth frame image is denoted as $s_j$, where j=1, 2, ..., or, n, n represents the quantity of the image frames included in the image frame sequence, and it is satisfied that n≥2.

Step S2522. Determining an actual size of the preset observation line.

The short side of the signal lamp generally complies with national standards, and is denoted as S.

Step S2523. Determining an imaging pixel size of the preset observation line in each frame image based on a camera parameter of the vehicle-mounted camera, the odometer frame information corresponding to each frame image, and the actual size of the preset observation line.

In the embodiments of this disclosure, the camera parameter includes the intrinsic parameter of the camera, which is denoted as K. The odometer frame information corresponding to each frame image is used to determine the extrinsic parameter of the camera, including the rotation matrix and the translation vector, which is denoted as T.

In an implementation, the imaging pixel size of the preset observation line in the jth frame image may be determined according to the following steps: determining the projection relationship between the world coordinate system and the pixel coordinate system corresponding to each frame image based the camera parameter of the vehicle-mounted camera and the odometer frame information corresponding to each frame image; and determining the imaging pixel size of the preset observation line in each frame image based on the projection relationship and the actual size of the preset observation line.

The projection relationship between the world coordinate system and the pixel coordinate system corresponding to each frame image is shown in the foregoing formula (15). The actual size S of the preset observation line that is determined in step S2522 is substituted into the foregoing formula (15), so as to obtain the imaging pixel size

$$s_{jp} = \frac{S * K}{T_j^w * z_w}$$ of the preset observation line in each frame image.

In another implementation, the imaging pixel size of the preset observation line in the jth frame image may be determined according to the following steps: determining a camera coordinate of a feature point on the preset observation line in each frame image based a world coordinate of any feature point on the preset observation line and the odometer frame information corresponding to each frame image; and determining the imaging pixel size of the preset observation line in each frame image based on the camera parameter of the vehicle-mounted camera and the camera coordinate of the feature point on the preset observation line in each frame image.

If the world coordinate of any feature point on the preset observation line is denoted as $(x_w, y_w, z_w)$, and the odometer frame information (that is, the extrinsic camera parameter) corresponding to the jth frame image is $T^w_j$, the camera coordinate $(x_j, y_j, z_j)$ of the feature point on the preset observation line in the jth frame image may be expressed in the following formula (20):

$$(x_j, y_j, z_j) = T_j^w * (x_w, y_w, z_w) \quad (20).$$

According to the principle of pinhole imaging, it may be learned that the imaging pixel size $s_{jp}$ of the preset observation line of the signal lamp in the pixel coordinate system, the actual size S of the preset observation line of the signal lamp, the camera parameter (that is, the intrinsic camera parameter) K of the vehicle-mounted camera, and the camera coordinate $z_j$ meet a relationship shown in the following formula (21):

$$\frac{z_j}{K} = \frac{S}{s_{jp}} \quad (21).$$

The imaging pixel size $s_{jp}$ of the preset observation line in the jth frame image is determined in combination with formulas (20) and (21), which may be expressed in the following formula (22):

$$s_{jp} = \frac{S * K}{T_j^w * z_w} \quad (22).$$

Step S2524. Determine the imaging residual function based on the observation pixel size and the imaging pixel size of the preset observation line in each frame image.

The observation pixel size of the preset observation line in each frame image that is determined according to step S2521 is $s_j$. The imaging pixel size of the preset observation line in each frame image that is determined according to step S2523 is $s_{jp}$. An imaging residual $e_{js}$ of the jth frame image that is determined based on the observation pixel size $s_j$ and the imaging pixel size $s_{jp}$ may be expressed in the following formula (23):

$$e_{js} = s_j - s_{jp} \quad (23).$$

For example, in the embodiments of this disclosure, the imaging residual function established based on the optimization function by using a least square as an example is shown in the following formula (24):

$$J_{e2} = \frac{1}{2} \sum_{j=0}^{n} e_{js}^2 \quad (24).$$

In practical applications, the imaging residual function may also be constructed by using other optimization functions, which is not limited herein.

In the embodiments of this disclosure, determining an imaging constraint condition for the traffic sign in a plurality of frame images according to the principle of pinhole imaging can reduce the errors in the predicted distance between the vehicle-mounted camera and the traffic sign.

Based on the foregoing embodiments, when the quantity of the traffic signs is greater than one, the predicted distances between the plurality of traffic signs located on a same plane in a same frame image and the vehicle-mounted camera are the same. Moreover, if the heights of the plurality of traffic signs are consistent, the predicted heights of the various traffic signs are also the same. On this basis, step S20253 of "determining the consistency residual function based on the bounding box and the odometer frame information that correspond to each frame image in response to that the quantity of the traffic signs is greater than the preset threshold" may be implemented according to the following steps S2531 to S2533.

Step S2531. Determining a first traffic sign and a second traffic sign from a plurality of the traffic signs in response to that the quantity of the traffic signs is greater than the preset threshold.

In the embodiments of this disclosure, a value of the preset threshold maybe 1. In other words, there are at least two traffic signs. First, two traffic signs are selected from the plurality of traffic signs to serve as the first traffic sign and the second traffic sign. For example, 2 of the 4 signal lamps shown in FIG. 1C are selected, where a first traffic signal on the left is used as the first traffic signal and a third traffic signal on the left is used as the second traffic signal.

Step S2532. Determining a first camera coordinate of the first traffic sign and a second camera coordinate of the second traffic sign in each frame image based on the bounding box and the odometer frame information that correspond to each frame image.

A world coordinate of the first signal lamp is denoted as ($x_w^a, y_w^a, z_w^a$), and a world coordinate of the second signal lamp is denoted as ($x_w^b, y_w^b, z_w^b$). If the odometer frame information (that is, the extrinsic camera parameter) corresponding to the jth frame image is $T_j^w$, a first camera coordinate ($x_j^a, y_j^a, z_j^a$) of the first signal lamp in the jth frame image may be expressed in the following formula (25), and a second camera coordinate ($x_j^b, y_j^b, z_j^b$) of the second signal lamp may be expressed in the following formula (26):

$$(x_j^a, y_j^a, z_j^a) = T_j^w * (x_w^a, y_w^a, z_w^a) \quad (25);$$

and

$$(x_j^b, y_j^b, z_j^b) = T_j^w * (x_w^b, y_w^b, z_w^b) \quad (26).$$

Step S2533. Determining the consistency residual function based on the first camera coordinate of the first traffic sign and the second camera coordinate of the second traffic sign in each frame image.

A distance and height consistency residual ($e_{jz}$, $e_{jy}$) corresponding to the jth frame image is determined based on the first camera coordinate ($x_j^a, y_j^a, z_j^a$) of the first signal lamp and the second camera coordinate ($x_j^b, y_j^b, z_j^b$) of the second signal lamp that are determined according to step S2532, and may be expressed in the following equation (27):

$$\begin{cases} e_{jz} = z_j^a - z_j^b \\ e_{jy} = y_j^a - y_j^b \end{cases} \quad (27).$$

For example, in the embodiments of this disclosure, the consistency residual function established based on the optimization function by using a least square as an example is shown in the following formula (28):

$$J_{e3} = \frac{1}{2} \sum_{j=0}^{n} (e_{jz}{}^2 + e_{jy}{}^2) \quad (28).$$

In some embodiments, for the consistency residual function, a consistency probability of two randomly selected traffic signs may also be considered. Assuming that there are t traffic signs, a consistency residual function constructed in this case may be expressed the formula (29):

$$J_{e3} = \frac{1}{2} C(t,2) \sum_{j=0}^{n} (e_{jz}{}^2 + e_{jy}{}^2) \quad (29),$$

where it is satisfied that $C(t,2) = \frac{t(t-1)}{2}$.

In practical applications, the optimization model constructed based on the residual function may be also in other forms, such as a square weighted sum, which is not limited herein.

In the embodiments of this disclosure, when it is determined that there are a plurality of side-by-side traffic signs, a consistency constraint condition for distances and heights of the plurality of traffic signs is determined based on a spatial position relationship that longitudinal distances and heights from the plurality of traffic signs to the vehicle are the same. This can not only reduce the errors in the predicted distance between the vehicle-mounted camera and the traffic sign, but can also resolve a problem of poor consistency in distance measurement for a plurality of traffic signs, thereby further improving distance measurement accuracy and improving safety of vehicle driving.

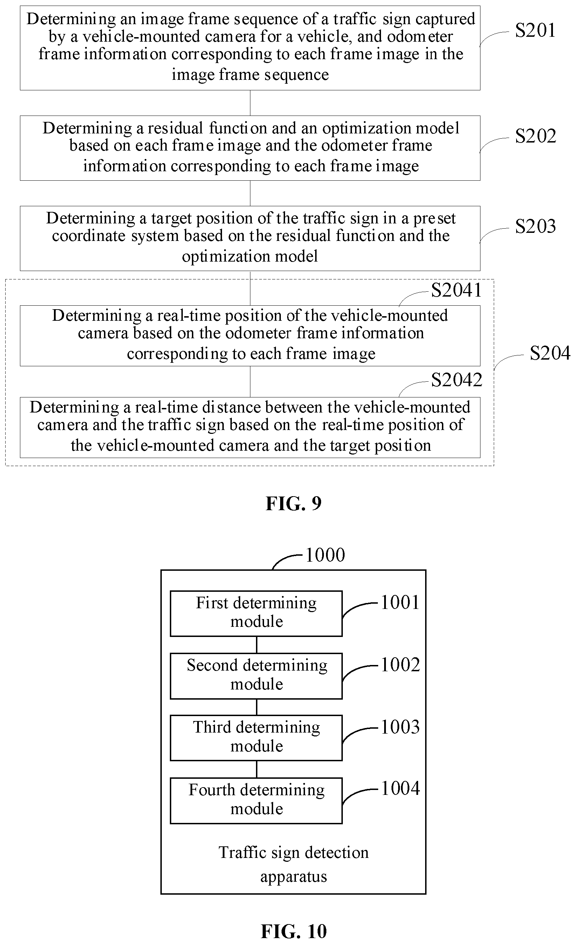

As shown in FIG. 9, on the basis of the foregoing embodiments, step S204 of determining the real-time distance between the vehicle-mounted camera and the traffic sign may be implemented according to the following steps S2041 and S2042.

Step S2041. Determining a real-time position of the vehicle-mounted camera based on the odometer frame information corresponding to each frame image.

The real-time position of the vehicle may be determined based on the odometer frame information, and the position of the vehicle-mounted camera on the vehicle remains unchanged. The real-time position of the vehicle-mounted camera is determined based on the real-time position of the vehicle and a position of the vehicle-mounted camera relative to a center point of the vehicle body, and is denoted as ($x_{jw}$, $y_{jw}$, $z_{jw}$).

Step S2042. Determine the real-time distance between the vehicle-mounted camera and the traffic sign based on the real-time position of the vehicle-mounted camera and the target position.

The real-time distance between the vehicle-mounted camera and the signal lamp is calculated based on the target position ($x_w$, $y_w$, $z_w$) of the signal lamp that is determined according to step S203 and the real-time position ($x_{jw}$, $y_{jw}$, $z_{jw}$) of the vehicle-mounted camera in combination with a formula for a distance between two points.

For examples, the real-time distance between the vehicle-mounted camera and the signal lamp may include at least one of the straight-line distance $d$, the lateral distance $d_x$, the longitudinal distance $d_z$, and the vertical distance $d_y$. It is satisfied that $d_x = x_{jw} - x_w$, $d_y = y_{jw} - y_w$, $d_z = z_{jw} - z_w$, and $d = \sqrt{d_x^2 + d_y^2 + d_z^2}$.

In practical applications, the required real-time distance may be determined according to specific application scenarios. This is not limited in the embodiments of this disclosure.

In the embodiments of this disclosure, predicting the real-time distance between the vehicle-mounted camera and the traffic sign based on the real-time position of the vehicle-mounted camera and the target position of the traffic sign can reduce the errors in the predicted distance between the vehicle-mounted camera and the traffic sign, thereby improving distance measurement accuracy and improving safety of vehicle driving.

Exemplary apparatus

Based on the foregoing embodiments, an embodiment of this disclosure provides a traffic sign detection apparatus. Modules included in the detection apparatus and units included in the modules may be implemented through a processor in a computer device, and certainly, may also be implemented through a specific logic circuit. In an implementation process, the processor may be a central processing unit (CPU), a microprocessor unit (MPU), a digital signal processor (DSP), or a field programmable gate array (FPGA).

FIG. 10 is a schematic structural diagram of a composition of a traffic sign detection apparatus according to an exemplary embodiment of this disclosure. As shown in FIG. 10, a detection apparatus 1000 includes:

a first determining module 1001, configured to determine an image frame sequence of the traffic sign captured by a vehicle-mounted camera for a vehicle, and odometer frame information corresponding to each frame image in the image frame sequence;

a second determining module 1002, configured to determine a residual function and an optimization model based on each frame image and the odometer frame information corresponding to each frame image that are determined by the first determining module 1001;

a third determining module 1003, configured to determine target positions of a plurality of detection points in the traffic sign in a preset coordinate system based on the residual function and the optimization model that are determined by the second determining module 1002; and

a fourth determining module 1004, configured to determine a target pose of the traffic sign or a real-time distance between the vehicle-mounted camera and the traffic sign based on the target positions determined by the third determining module 1003.

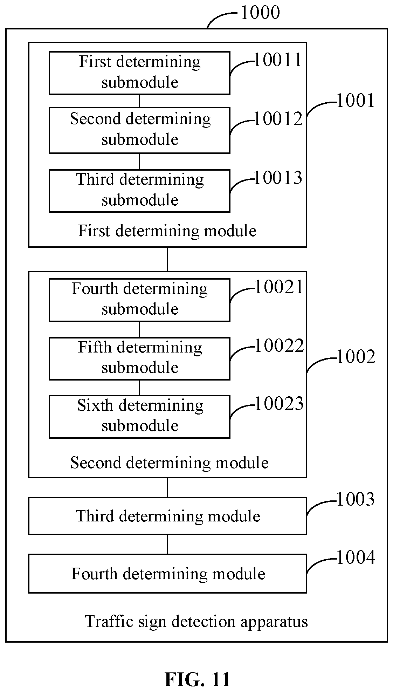

As shown in FIG. 11, on the basis of the embodiment shown in FIG. 10, the first determining module 1001 may include:

a first determining submodule 10011, configured to determine the image frame sequence of the traffic sign captured by the vehicle-mounted camera for the vehicle;

a second determining submodule 10012, configured to determine odometer information that is acquired by a driving recorder for the vehicle in a real-time manner; and

a third determining submodule 10013, configured to determine the odometer frame information corresponding to each frame image from the odometer information based on a first timestamp of each frame image in the image frame sequence and a second timestamp of each frame of information in the odometer information.

As shown in FIG. 11, in some embodiments, the second determining module 1002 may include a fourth determining submodule 10021, a fifth determining submodule 10022, and a sixth determining submodule 10023. When the detection apparatus is configured to detect the pose of the traffic sign, functions of the fourth determining submodule 10021 to the sixth determining submodule 10023 are different from functions for detecting the real-time distance between the vehicle-mounted camera and the traffic sign.

During detection of the pose of the traffic sign, the fourth determining submodule 10021 is configured to perform feature extraction on each frame image to determine detection points of the traffic sign in each frame image; the fifth determining submodule 10022 is configured to determine a residual function based on the detection points and the odometer frame information that correspond to each frame image; and the sixth determining submodule 10023 is configured to determine the optimization model based on the residual function.

In some embodiments, during the detection of the pose of the traffic sign, the fifth determining submodule 10022 may include a first determining unit, a second determining unit, and a third determining unit.

The first determining unit is configured to determine a reprojection residual function based on the detection points and the odometer frame information that correspond to each frame image; the second determining unit is configured to determine a consistency residual function based on a plurality of detection points corresponding to each frame image in response to that a quantity of the detection points is greater than a preset threshold; and the third determining unit is configured to determine the residual function based on the reprojection residual function and/or the consistency residual function.

In some embodiments, the first determining unit may include:

a first determining subunit, configured to determine an observation pixel coordinate of the detection points in each frame image based on the detection points corresponding to each frame image;
a second determining subunit, configured to determine a reference frame image from various frame images, and determine at least one frame image except the reference frame image as an observation frame image;
a third determining subunit, configured to determine a reprojection pixel coordinate of the detection points in each observation frame image based on a camera parameter of the vehicle-mounted camera, the odometer frame information corresponding to each frame image, and the observation pixel coordinate of the detection points in the reference frame image; and
a fourth determining subunit, configured to determine the reprojection residual function based on the observation pixel coordinate and the reprojection pixel coordinate of the detection points in each observation frame image.

In some embodiments, the third determining subunit is further configured to: determine a reference coordinate of the detection points in the preset coordinate system based on the camera parameter of the vehicle-mounted camera and the observation pixel coordinate of the detection points in the reference frame image; and determine the reprojection pixel coordinate of the detection points in each observation frame image based on the camera parameter, the reference coordinate of the detection points, and the odometer frame information corresponding to each frame image.

In some embodiments, the second determining unit may include:

a fifth determining subunit, configured to determine a first detection point, a second detection point, a third detection point, and a fourth detection point from the plurality of detection points corresponding to each frame image in response to that the quantity of the detection points is greater than the preset threshold, where the first detection point, the second detection point, and the third detection point corresponding to one frame image are not collinear;
a sixth determining subunit, configured to determine a first pixel coordinate of the first detection point, a second pixel coordinate of the second detection point, a third pixel coordinate of the third detection point, and a fourth pixel coordinate of the fourth detection point in each frame image;
a seventh determining subunit, configured to determine a first camera coordinate of the first detection point, a second camera coordinate of the second detection point, a third camera coordinate of the third detection point, and a fourth camera coordinate of the fourth detection point in each frame image based on the first pixel coordinate of the first detection point, the second pixel coordinate of the second detection point, the third pixel coordinate of the third detection point, and the fourth pixel coordinate of the fourth detection point in each frame image, and the camera parameter of the vehicle-mounted camera; and
an eighth determining subunit, configured to determine the consistency residual function based on the first camera coordinate of the first detection point, the second camera coordinate of the second detection point, the third camera coordinate of the third detection point, and the fourth camera coordinate of the fourth detection point in each frame image.

In some embodiments, the eighth determining subunit is further configured to: determine a traffic sign imaging plane corresponding to each frame image based on the first camera coordinate of the first detection point, the second camera coordinate of the second detection point, and the third camera coordinate of the third detection point in each frame image; determine a consistency residual corresponding to each frame image based on the fourth camera coordinate of the fourth detection point in each frame image and the traffic sign imaging plane corresponding to each frame image; and determine the consistency residual function based on the consistency residual corresponding to each frame image.

In some embodiments, during detection of the real-time distance between the vehicle-mounted camera and the traffic sign, the fourth determining submodule 10021 is further configured to perform feature extraction on each frame image to determine a bounding box of the traffic sign in each frame image; the fifth determining submodule 10022 is further configured to determine the residual function based on the bounding box and the odometer frame information that correspond to each frame image; and the sixth determining submodule 7023 is further configured to determine the optimization model based on the residual function.

In some embodiments, during the detection of the real-time distance between the vehicle-mounted camera and the traffic sign, the fifth determining submodule 10022 may include a fourth determining unit, a fifth determining unit, a sixth determining unit, and a seventh determining unit.

The fourth determining unit is configured to determine a projection residual function based on the bounding box and the odometer frame information that correspond to each frame image. The fifth determining unit is configured to determine an imaging residual function based on the bounding box and the odometer frame information that correspond to each frame image. The sixth determining unit is configured to determine a consistency residual function based on the bounding box and the odometer frame information that correspond to each frame image in response to that a quantity of traffic signs is greater than a preset threshold. The seventh determining unit is configured to determine the residual function based on at least one of the projection residual function, the imaging residual function, and the consistency residual function.

In some embodiments, the fourth determining unit is specifically configured to: determine an observation pixel coordinate of a preset observation point of the traffic sign in each frame image based on the bounding box corresponding to each frame image; determine a world coordinate of the preset observation point; determine a projection pixel coordinate of the preset observation point in each frame image based on a camera parameter of the vehicle-mounted camera, the odometer frame information corresponding to each frame image, and the world coordinate of the preset observation point; and determine the projection residual function based on the observation pixel coordinate and the projection pixel coordinate of the preset observation point in each frame image.

In some embodiments, the fourth determining unit is specifically configured to: determine a projection relationship between a world coordinate system and a pixel coordinate system corresponding to each frame image based on the camera parameter of the vehicle-mounted camera and the odometer frame information corresponding to each frame image; and determine the projection pixel coordinate of the preset observation point in each frame image based on the projection relationship and the world coordinate of the preset observation point.

In some embodiments, the fifth determining unit is specifically configured to: determine an observation pixel size of a preset observation line of the traffic sign in each frame image based on the bounding box corresponding to each frame image; determine an actual size of the preset observation line; determine an imaging pixel size of the preset observation line in each frame image based on a camera parameter of the vehicle-mounted camera, the odometer frame information corresponding to each frame image, and the actual size of the preset observation line; and determine the imaging residual function based on the observation pixel size and the imaging pixel size of the preset observation line in each frame image.

In some embodiments, the fifth determining unit is specifically configured to: determine a projection relationship between a world coordinate system and a pixel coordinate system corresponding to each frame image based on the camera parameter of the vehicle-mounted camera and the odometer frame information corresponding to each frame image; and determine the imaging pixel size of the preset observation line in each frame image based on the projection relationship and the actual size of the preset observation line.

In some embodiments, the sixth determining unit is specifically configured to: determine a first traffic sign and a second traffic sign from a plurality of the traffic signs in response to that the quantity of the traffic signs is greater than the preset threshold; determine a first camera coordinate of the first traffic sign and a second camera coordinate of the second traffic sign in each frame image based on the bounding box and the odometer frame information that correspond to each frame image; and determine the consistency residual function based on the first camera coordinate of the first traffic sign and the second camera coordinate of the second traffic sign in each frame image.

In some embodiments, the fourth determining module 1004 is specifically configured to determine a real-time position of the vehicle-mounted camera based on the odometer frame information corresponding to each frame image; and determine the real-time distance between the vehicle-mounted camera and the traffic sign based on the real-time position of the vehicle-mounted camera and the target position.

It should be noted that the description about the exemplary embodiments of the apparatus is similar to the description about the method, and has same beneficial effects as the exemplary embodiments corresponding to the method. For technical details that are not disclosed in the exemplary embodiments of the apparatus in this disclosure and corresponding beneficial technical effects, a person skilled in the art should refer to the description about the exemplary embodiments of the method in this disclosure for understanding. Details are not described herein again.

It should be noted that the description about the exemplary embodiments of the apparatus is similar to the description about the method, and has same beneficial effects as the exemplary embodiments corresponding to the method. For technical details that are not disclosed in the exemplary embodiments of the apparatus in this disclosure and corresponding beneficial technical effects, a person skilled in the art should refer to the description about the exemplary embodiments of the method in this disclosure for understanding. Details are not described herein again.

Exemplary electronic device

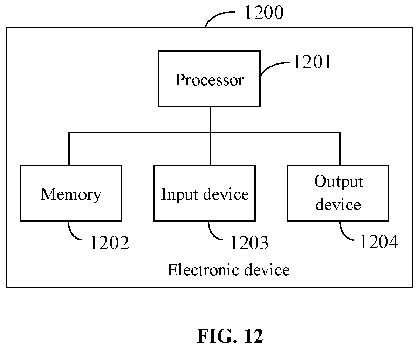

FIG. 12 is a structural diagram of a composition of an electronic device according to an exemplary embodiment of this disclosure. As shown in FIG. 12, an electronic device 1200 includes at least one processor 1201 and a memory 1202.

The processor 1201 may be a central processing unit (CPU) or another form of processing unit having a data processing capability and/or an instruction execution capability, and may control another component in the electronic device 1200 to implement a desired function.

The memory 1202 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1201 may execute one or more of the program instructions to implement the traffic sign detection method according to various embodiments of this disclosure that are described above and/or other desired functions.

In an example, the electronic device 1200 may further include an input device 1203 and an output device 1204. These components are connected to each other through a bus system and/or another form of connection mechanism (not shown).

The input device 1203 may further include, for example, a keyboard and a mouse.

The output device 1204 may output various information to the outside, and may include, for example, a display, a speaker, a printer, a communication network, and a remote output device connected by the communication network.

Certainly, for simplicity, FIG. 12 shows only some of components in the electronic device 1200 that are related to this disclosure, and components such as a bus and an input/output interface are omitted. In addition, according to specific application situations, the electronic device 1200 may further include any other appropriate components.

Exemplary computer program product and computer readable storage medium

In addition to the foregoing method and device, the embodiments of this disclosure may also provide a computer program product, which includes computer program instructions. When the computer program instructions are run by a processor, the processor is enabled to perform the steps, of the traffic sign detection method according to the embodiments of this disclosure, that are described in the "exemplary method" part described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the traffic sign detection method according to the embodiments of this disclosure, that are described in the "exemplary method" part described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this disclosure. In this way, if these modifications and variations of this disclosure fall within the scope of the claims and equivalent technologies of the claims of this disclosure, this disclosure also intends to include

# EP 4 517 699 A1

these modifications and variations.

**Claims**

1. A traffic sign detection method, comprising:

   determining an image frame sequence of the traffic sign captured by a vehicle-mounted camera for a vehicle, and odometer frame information corresponding to each frame image in the image frame sequence;
   determining a residual function and an optimization model based on each frame image and the odometer frame information corresponding to each frame image;
   determining a target position of the traffic sign in a preset coordinate system based on the residual function and the optimization model; and
   determining a target pose of the traffic sign or a real-time distance between the vehicle-mounted camera and the traffic sign based on the target position.

2. The method according to claim 1, wherein the determining a residual function and an optimization model based on each frame image and the odometer frame information corresponding to each frame image comprises:

   performing feature extraction on each frame image to determine detection points of the traffic sign in each frame image;
   determining the residual function based on the detection points and the odometer frame information that correspond to each frame image; and
   determining the optimization model based on the residual function.

3. The method according to claim 2, wherein the determining the residual function based on the detection points and the odometer frame information that correspond to each frame image comprises:

   determining a reprojection residual function based on the detection points and the odometer frame information that correspond to each frame image;
   determining a consistency residual function based on a plurality of detection points corresponding to respective frame images in response to that a quantity of the detection points is greater than a preset threshold; and
   determining the residual function based on the reprojection residual function and/or the consistency residual function.

4. The method according to claim 3, wherein the determining a reprojection residual function based on the detection points and the odometer frame information that correspond to each frame image comprises:

   determining an observation pixel coordinate of the detection points in each frame image based on the detection points corresponding to each frame image;
   determining a reference frame image from the frame images, and determining at least one frame image except the reference frame image as an observation frame image;
   determining a reprojection pixel coordinate of the detection points in each observation frame image based on a camera parameter of the vehicle-mounted camera, the odometer frame information corresponding to each frame image, and the observation pixel coordinate of the detection points in the reference frame image; and
   determining the reprojection residual function based on the observation pixel coordinate and the reprojection pixel coordinate of the detection points in each observation frame image.

5. The method according to claim 3 or 4, wherein the determining a consistency residual function based on a plurality of detection points corresponding to respective frame images in response to that a quantity of the detection points is greater than a preset threshold comprises:

   determining a first detection point, a second detection point, a third detection point, and a fourth detection point from the plurality of detection points corresponding to respective frame images in response to that the quantity of the detection points is greater than the preset threshold, wherein the first detection point, the second detection point, and the third detection point corresponding to one frame image are not collinear;
   determining a first pixel coordinate of the first detection point, a second pixel coordinate of the second detection point, a third pixel coordinate of the third detection point, and a fourth pixel coordinate of the fourth detection point in each frame image;

determining a first camera coordinate of the first detection point, a second camera coordinate of the second detection point, a third camera coordinate of the third detection point, and a fourth camera coordinate of the fourth detection point in each frame image based on the first pixel coordinate of the first detection point, the second pixel coordinate of the second detection point, the third pixel coordinate of the third detection point, and the fourth pixel coordinate of the fourth detection point in each frame image, and the camera parameter of the vehicle-mounted camera; and

determining the consistency residual function based on the first camera coordinate of the first detection point, the second camera coordinate of the second detection point, the third camera coordinate of the third detection point, and the fourth camera coordinate of the fourth detection point in each frame image.

6. The method according to claim 5, wherein the determining the consistency residual function based on the first camera coordinate of the first detection point, the second camera coordinate of the second detection point, the third camera coordinate of the third detection point, and the fourth camera coordinate of the fourth detection point in each frame image comprises:

determining a traffic sign imaging plane corresponding to each frame image based on the first camera coordinate of the first detection point, the second camera coordinate of the second detection point, and the third camera coordinate of the third detection point in each frame image;

determining a consistency residual corresponding to each frame image based on the fourth camera coordinate of the fourth detection point in each frame image and the traffic sign imaging plane corresponding to each frame image; and

determining the consistency residual function based on the consistency residual corresponding to each frame image.

7. The method according to any one of the claims 1 to 6, wherein the determining a residual function and an optimization model based on each frame image and the odometer frame information corresponding to each frame image comprises:

performing feature extraction on each frame image to determine a bounding box of the traffic sign in each frame image;

determining the residual function based on the bounding box and the odometer frame information that correspond to each frame image; and

determining the optimization model based on the residual function.

8. The method according to claim 7, wherein the determining the residual function based on the bounding box and the odometer frame information that correspond to each frame image comprises:

determining a projection residual function based on the bounding box and the odometer frame information that correspond to each frame image;

determining an imaging residual function based on the bounding box and the odometer frame information that correspond to each frame image;

determining a consistency residual function based on the bounding box and the odometer frame information that correspond to each frame image in response to that a quantity of traffic signs is greater than a preset threshold; and

determining the residual function based on at least one of the projection residual function, the imaging residual function, and the consistency residual function.

9. The method according to claim 8, wherein the determining a projection residual function based on the bounding box and the odometer frame information that correspond to each frame image comprises:

determining an observation pixel coordinate of a preset observation point of the traffic sign in each frame image based on the bounding box corresponding to each frame image;

determining a world coordinate of the preset observation point;

determining a projection pixel coordinate of the preset observation point in each frame image based on a camera parameter of the vehicle-mounted camera, the odometer frame information corresponding to each frame image, and the world coordinate of the preset observation point; and

determining the projection residual function based on the observation pixel coordinate and the projection pixel coordinate of the preset observation point in each frame image.

10. The method according to claim 8 or 9, wherein the determining an imaging residual function based on the bounding box and the odometer frame information that correspond to each frame image comprises:

determining an observation pixel size of a preset observation line of the traffic sign in each frame image based on the bounding box corresponding to each frame image;
determining an actual size of the preset observation line;
determining an imaging pixel size of the preset observation line in each frame image based on a camera parameter of the vehicle-mounted camera, the odometer frame information corresponding to each frame image, and the actual size of the preset observation line; and
determining the imaging residual function based on the observation pixel size and the imaging pixel size of the preset observation line in each frame image.

11. The method according to any one of the claims 8 to 10, wherein the determining a consistency residual function based on the bounding box and the odometer frame information that correspond to each frame image in response to that a quantity of traffic signs is greater than a preset threshold comprises:

determining a first traffic sign and a second traffic sign from a plurality of the traffic signs in response to that the quantity of the traffic signs is greater than the preset threshold;
determining a first camera coordinate of the first traffic sign and a second camera coordinate of the second traffic sign in each frame image based on the bounding box and the odometer frame information that correspond to each frame image; and
determining the consistency residual function based on the first camera coordinate of the first traffic sign and the second camera coordinate of the second traffic sign in each frame image.

12. The method according to any one of the claims 1 to 11, wherein determining the real-time distance between the vehicle-mounted camera and the traffic sign based on the target position comprises:

determining a real-time position of the vehicle-mounted camera based on the odometer frame information corresponding to each frame image; and
determining the real-time distance between the vehicle-mounted camera and the traffic sign based on the real-time position of the vehicle-mounted camera and the target position.

13. A traffic sign detection apparatus, comprising:

a first determining module, configured to determine an image frame sequence of the traffic sign captured by a vehicle-mounted camera for a vehicle, and odometer frame information corresponding to each frame image in the image frame sequence;
a second determining module, configured to determine a residual function and an optimization model based on each frame image and the odometer frame information corresponding to each frame image;
a third determining module, configured to determine a target position of the traffic sign in a preset coordinate system based on the residual function and the optimization model; and
a fourth determining module, configured to determine a target pose of the traffic sign or a real-time distance between the vehicle-mounted camera and the traffic sign based on the target position.

14. A computer readable storage medium, storing a computer program thereon, which is used for implementing the traffic sign detection method according to any one of claims 1 to 12.

15. An electronic device, comprises:

a processor; and
a memory, configured to store a processor-executable instruction,
wherein the processor is configured to read the executable instruction from the memory, and execute the instruction to implement the traffic sign detection method according to any one of claims 1 to 12.

**FIG. 1A**

**FIG. 1B**

104

**FIG. 1C**

| Determining an image frame sequence of a traffic sign captured by a vehicle-mounted camera for a vehicle, and odometer frame information corresponding to each frame image in the image frame sequence | S201 |
|---|---|

| Determining a residual function and an optimization model based on each frame image and the odometer frame information corresponding to each frame image | S202 |

| Determining a target position of the traffic sign in a preset coordinate system based on the residual function and the optimization model | S203 |

| Determining a target pose of the traffic sign or a real-time distance between the vehicle-mounted camera and the traffic sign based on the target position | S204 |

**FIG. 2**

FIG. 3A

FIG. 3B

S2011

Determining an image frame sequence of a traffic sign captured by a vehicle-mounted camera for a vehicle

S2012

Determining odometer information that is acquired by a driving recorder for the vehicle in a real-time manner

S2013

Determining odometer frame information corresponding to each frame image from the odometer information based on a first timestamp of each frame image in the image frame sequence and a second timestamp of each frame of information in the odometer information

S201

Determining a residual function and an optimization model based on each frame image and the odometer frame information corresponding to each frame image

S202

Determining a target position of the traffic sign in a preset coordinate system based on the residual function and the optimization model

S203

Determining a target pose of the traffic sign or a real-time distance between the vehicle-mounted camera and the traffic sign based on the target position

S204

**FIG. 4**

```
┌─────────────────────────────────────────────────────┐
│                                    ⌐S2011             │
│  ┌─────────────────────────────────────────────────┐ │
│  │ Determining an image frame sequence of a traffic │ │
│  │ sign captured by a vehicle-mounted camera for a  │ │
│  │ vehicle                                          │ │
│  └─────────────────────────────────────────────────┘ │
│                                    ⌐S2012             │
│  ┌─────────────────────────────────────────────────┐ │
│  │ Determining odometer information that is         │ │    ⌐S201
│  │ acquired by a driving recorder for the vehicle   │ │
│  │ in a real-time manner                            │ │
│  └─────────────────────────────────────────────────┘ │
│                                    ⌐S2013             │
│  ┌─────────────────────────────────────────────────┐ │
│  │ Determining odometer frame information           │ │
│  │ corresponding to each frame image from the       │ │
│  │ odometer information based on a first timestamp   │ │
│  │ of each frame image in the image frame sequence  │ │
│  │ and a second timestamp of each frame of          │ │
│  │ information in the odometer information           │ │
│  └─────────────────────────────────────────────────┘ │
└─────────────────────────────────────────────────────┘
```

Performing feature extraction on each frame image to determine detection points of the traffic sign in each frame image — S2021

Determining a residual function based on the detection points and the odometer frame information that correspond to each frame image — S2022, S202

Determining an optimization model based on the residual function — S2023

Determining target coordinates respectively corresponding to a plurality of detection points in the traffic sign in a preset coordinate system based on the residual function and the optimization model — S203

Determining a target pose of the traffic sign based on the target coordinates respectively corresponding to the plurality of detection points — S204

**FIG. 5**

```
┌─────────────────────────────────────────────────────────────┐ ⟋S2011
│  ┌───────────────────────────────────────────────────────┐   │
│  │ Determining an image frame sequence of a traffic sign  │   │
│  │ captured by a vehicle-mounted camera for a vehicle     │   │
│  └───────────────────────────────────────────────────────┘   │ ⟋S2012
│  ┌───────────────────────────────────────────────────────┐   │
│  │ Determining odometer information that is acquired by a │   │
│  │ driving recorder for the vehicle in a real-time manner │   │      ⟋S201
│  └───────────────────────────────────────────────────────┘   │ ⟋S2013
│  ┌───────────────────────────────────────────────────────┐   │
│  │ Determining odometer frame information corresponding to│   │
│  │  each frame image from the odometer information based  │   │
│  │  on a first timestamp of each frame image in the image │   │
│  │  frame sequence and a second timestamp of each frame   │   │
│  │     of information in the odometer information          │   │
│  └───────────────────────────────────────────────────────┘   │
└─────────────────────────────────────────────────────────────┘  ⟋S202
┌─────────────────────────────────────────────────────────────┐ ⟋S2021
│  ┌───────────────────────────────────────────────────────┐   │
│  │ Performing feature extraction on each frame image to   │   │
│  │ determine detection points of the traffic sign in each │   │
│  │ frame image                                            │   │  ⟋S2022
│  └───────────────────────────────────────────────────────┘   │
│  ┌───────────────────────────────────────────────────────┐   │
│  │  ┌─────────────────────────────────────────────────┐  │   │ ⟋S20221
│  │  │ Determining a reprojection residual function     │  │   │
│  │  │ based on the detection points and the odometer   │  │   │
│  │  │ frame information that correspond to each frame   │  │   │
│  │  │ image                                            │  │   │
│  │  └─────────────────────────────────────────────────┘  │   │ ⟋S20222
│  │  ┌─────────────────────────────────────────────────┐  │   │
│  │  │ Determining a consistency residual function based│  │   │
│  │  │ on a plurality of detection points corresponding │  │   │
│  │  │ to each frame image in response to that a quantity│  │   │
│  │  │ of the detection points is greater than a preset  │  │   │
│  │  │ threshold                                        │  │   │
│  │  └─────────────────────────────────────────────────┘  │   │ ⟋S20223
│  │  ┌─────────────────────────────────────────────────┐  │   │
│  │  │ Determining a residual function based on the     │  │   │
│  │  │ reprojection residual function and/or the        │  │   │
│  │  │ consistency residual function                    │  │   │
│  │  └─────────────────────────────────────────────────┘  │   │
│  └───────────────────────────────────────────────────────┘   │ ⟋S2023
│  ┌───────────────────────────────────────────────────────┐   │
│  │ Determining an optimization model based on the residual│   │
│  │ function                                               │   │
│  └───────────────────────────────────────────────────────┘   │
└─────────────────────────────────────────────────────────────┘
   ┌───────────────────────────────────────────────────────┐
   │ Determining target coordinates respectively            │
   │ corresponding to a plurality of detection points in the│   ⟋S203
   │ traffic sign in a preset coordinate system based on the│
   │ residual function and the optimization model           │
   └───────────────────────────────────────────────────────┘
   ┌───────────────────────────────────────────────────────┐
   │ Determining a target pose of the traffic sign based on │   ⟋S204
   │ the target coordinates respectively corresponding to   │
   │ the plurality of detection points                      │
   └───────────────────────────────────────────────────────┘
```

**FIG. 6**

S2011

Determining an image frame sequence of a traffic sign captured by a vehicle-mounted camera for a vehicle

S2012

Determining odometer information that is acquired by a driving recorder for the vehicle in a real-time manner

S2013

Determining odometer frame information corresponding to each frame image from the odometer information based on a first timestamp of each frame image in the image frame sequence and a second timestamp of each frame of information in the odometer information

S201

S2024

Performing feature extraction on each frame image to determine a bounding box of the traffic sign in each frame image

S2025

Determining a residual function based on the bounding box and the odometer frame information that correspond to each frame image

S2026

Determining an optimization model based on the residual function

S202

Determining a target position of the traffic sign in a world coordinate system based on the residual function and the optimization model

S203

Determining a real-time distance between the vehicle-mounted camera and the traffic sign based on the odometer frame information corresponding to each frame image and the target position

S204

**FIG. 7**

S2011

Determining an image frame sequence of a traffic sign that is captured in a real-time manner by a vehicle-mounted camera for a vehicle

S2012

Determining odometer information that is acquired by a driving recorder for the vehicle in a real-time manner

S2013

Determining odometer frame information corresponding to each frame image from the odometer information based on a first timestamp of each frame image in the image frame sequence and a second timestamp of each frame of information in the odometer information

S201

S2024

Performing feature extraction on each frame image to determine a bounding box of the traffic sign in each frame image

S2022

S20251

Determining a projection residual function based on the bounding box and the odometer frame information that correspond to each frame image

S20252

Determining an imaging residual function based on the bounding box and the odometer frame information that correspond to each frame image

S20253

Determining a consistency residual function based on the bounding box and the odometer frame information that correspond to each frame image in response to that a quantity of traffic signs is greater than a preset threshold

S20254

Determining a residual function based on at least one of the projection residual function, the imaging residual function, and the consistency residual function

S202

S2026

Determining an optimization model based on the residual function

Determining a target position of the traffic sign in a world coordinate system based on the residual function and the optimization model

S203

Determining a real-time distance between the vehicle-mounted camera and the traffic sign based on the odometer frame information corresponding to each frame image and the target position

S204

**FIG. 8**

Determining an image frame sequence of a traffic sign captured by a vehicle-mounted camera for a vehicle, and odometer frame information corresponding to each frame image in the image frame sequence ⌐ S201

Determining a residual function and an optimization model based on each frame image and the odometer frame information corresponding to each frame image ⌐ S202

Determining a target position of the traffic sign in a preset coordinate system based on the residual function and the optimization model ⌐ S203

⌐ S2041

Determining a real-time position of the vehicle-mounted camera based on the odometer frame information corresponding to each frame image

⌐ S204

⌐ S2042

Determining a real-time distance between the vehicle-mounted camera and the traffic sign based on the real-time position of the vehicle-mounted camera and the target position

**FIG. 9**

⌐ 1000

| First determining module | ⌐ 1001 |
|---|---|
| Second determining module | ⌐ 1002 |
| Third determining module | ⌐ 1003 |
| Fourth determining module | ⌐ 1004 |

Traffic sign detection apparatus

**FIG. 10**

┌─────────────────────────────────────────┐ ─1000
│  ┌───────────────────────────────────┐   │
│  │  ┌─────────────────────┐          │   │
│  │  │ First determining   │─10011    │   │
│  │  │ submodule           │          │   │
│  │  └─────────────────────┘          │   │
│  │  ┌─────────────────────┐          │──1001
│  │  │ Second determining  │─10012    │   │
│  │  │ submodule           │          │   │
│  │  └─────────────────────┘          │   │
│  │  ┌─────────────────────┐          │   │
│  │  │ Third determining   │─10013    │   │
│  │  │ submodule           │          │   │
│  │  └─────────────────────┘          │   │
│  │     First determining module      │   │
│  └───────────────────────────────────┘   │
│  ┌───────────────────────────────────┐   │
│  │  ┌─────────────────────┐          │   │
│  │  │ Fourth determining  │─10021    │   │
│  │  │ submodule           │          │   │
│  │  └─────────────────────┘          │   │
│  │  ┌─────────────────────┐          │──1002
│  │  │ Fifth determining   │─10022    │   │
│  │  │ submodule           │          │   │
│  │  └─────────────────────┘          │   │
│  │  ┌─────────────────────┐          │   │
│  │  │ Sixth determining   │─10023    │   │
│  │  │ submodule           │          │   │
│  │  └─────────────────────┘          │   │
│  │    Second determining module      │   │
│  └───────────────────────────────────┘   │
│  ┌───────────────────────────────────┐   │
│  │     Third determining module      │──1003
│  └───────────────────────────────────┘   │
│  ┌───────────────────────────────────┐   │
│  │     Fourth determining module     │──1004
│  └───────────────────────────────────┘   │
│      Traffic sign detection apparatus     │
└─────────────────────────────────────────┘

**FIG. 11**

**FIG. 12**

Europäisches
Patentamt

European
Patent Office

Office européen
des brevets

# EUROPEAN SEARCH REPORT

**Application Number**

EP 24 19 7568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG YANTING ET AL: "Bundle Adjustment for Monocular Visual Odometry Based on Detections of Traffic Signs", IEEE TRANSACTIONS ON VEHICULAR TECHNOLOGY, IEEE, USA, vol. 69, no. 1, 20 November 2019 (2019-11-20), pages 151-162, XP011766813, ISSN: 0018-9545, DOI: 10.1109/TVT.2019.2954876 [retrieved on 2020-01-16] * abstract, sections III., III. C, IV. A,; table 1 * | 1-15 | INV. G06V20/58 |
| A | SINISA SEGVIC ET AL: "Exploiting temporal and spatial constraints in traffic sign detection from a moving vehicle", MACHINE VISION AND APPLICATIONS., vol. 25, no. 3, 15 December 2011 (2011-12-15), pages 649-665, XP055623173, DE ISSN: 0932-8092, DOI: 10.1007/s00138-011-0396-y * the whole document * | 1-15 | TECHNICAL FIELDS SEARCHED (IPC) G06V |

The present search report has been drawn up for all claims

| Place of search | Date of completion of the search | Examiner |
|---|---|---|
| The Hague | 9 January 2025 | Lepetit, Nicolas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311117556

- CN 202311118124